# EUROPEAN PATENT APPLICATION

(11) **EP 2 159 777 A2**
(43) Date of publication of application: **03.03.2010**
(21) Application number: 09251231.8
(22) Date of filing: 30.04.2009
(51) Int. Cl.: G08G 1/0967, G06F 17/30, G01C 21/26, G09B 29/10

(54) **Data mining to identify locations of potentially hazardous conditions for vehicle operation and use thereof**

(30) Priority: 30.05.2008 US 156270; 30.05.2008 US 156303; 30.05.2008 US 156304; 30.05.2008 US 156299; 30.05.2008 US 156269; 30.05.2008 US 156276; 30.05.2008 US 156243; 30.05.2008 US 156310; 30.05.2008 US 156311; 30.05.2008 US 156224; 30.05.2008 US 156277; 30.05.2008 US 156326; 30.05.2008 US 156264
(71) Applicant: Navteq North America, LLC, Chicago, IL 60606 (US)
(72) Inventor: Denardo, Robert, Long Grove, IL 60047 (US)
(74) Representative: Palmer, Jonathan R.

(57) **Abstract**

Disclosed is a feature for a vehicle that enables taking precautionary actions in response to conditions on the road network around or ahead of the vehicle. A database that represents the road network is used to determine locations where a potentially hazardous condition exists. Then, precautionary action data is added to the database to indicate a location at which a precautionary action is to be taken relating to the hazardous condition. A precautionary action system installed in a vehicle uses this database, or a database derived therefrom, in combination with a positioning system to determine when the vehicle is at a location that corresponds to the location of a precautionary action. When the vehicle is at such a location, a precautionary action is taken by a vehicle system as the vehicle is approaching the location where the potentially hazardous condition exists.

## Description

### BACKGROUND OF THE INVENTION

The present invention relates to a method and system that enables taking a precautionary action in a vehicle, such as providing a warning to a vehicle driver about a potentially difficult, challenging or hazardous driving condition on the road network.

Advanced driver assistance systems ("ADAS"), including active safety and fuel economy systems, have been developed to improve the comfort, efficiency, safety, and overall satisfaction of driving. Examples of these advanced driver assistance systems include adaptive headlight aiming, adaptive cruise control, lane departure warning and control, curve warning, speed limit notification, hazard warning, predictive cruise control, and adaptive shift control, as well as others. Some of these advanced driver assistance systems use a variety of sensor mechanisms in the vehicle to determine the current state of the vehicle and the current state of the roadway in front of the vehicle. These sensor mechanisms may include radar, infrared, ultrasonic and vision-oriented sensors, such as digital video cameras and lidar. Some advanced driver assistance systems also use digital map data. Digital map data can be used in advanced driver assistance systems to provide information about the road network, road geometry, road conditions and other items associated with the road and terrain around the vehicle. Digital map data is not affected by environmental conditions, such as fog, rain or snow. In addition, digital map data can provide useful information that cannot reliably be provided by cameras or radar, such as curvature, grade, bank, speed limits that are not indicated by signage, traffic and lane restrictions, etc. Further, digital map data can provide a predictive capability well beyond the range of other sensors or even beyond the driver's vision to determine the road ahead of the vehicle, around corners, over hills or beyond obstructions. Accordingly, digital map data can be a useful addition for some advanced driver assistance systems.

Although these kinds of systems provide useful features, there exists room for further improvements. For example, it would be useful to identify locations on the road network where a relatively high number of traffic accidents have occurred. However, statistics pertaining to accidents are maintained by various different administrative entities that use different formats, standards, reporting methods, reporting periods, etc. Accordingly, it is difficult to obtain consistent information about traffic accidents on roads in a large geographic region, such as the entire United States or Europe. Moreover, data indicating locations where a statistically large number of traffic accidents occur may not indicate the causes of the accidents or how accidents can be avoided.

Accordingly, it is an objective to provide a system that facilitates taking a precautionary action in a vehicle, such as providing a warning to a vehicle operator, when approaching a location where accidents may occur.

### SUMMARY OF THE INVENTION

To address these and other objectives, the present invention comprises data mining in a digital roadmap database with its associated road feature data attributes to identify potentially hazardous locations on a road where critical attributes exceed a threshold representing that hazardous condition, or to identify combinations of digital roadmap database features that, in combination, constitute a potentially hazardous condition, and subsequently store such features in the database to enable the driver to be more cautious or to take a precautionary action, or for the vehicle to automatically take a precautionary action or adjust control or sensor sensitivities to accommodate the hazardous condition as the vehicle approaches the location identified as being hazardous or difficult. The precautionary action may be a warning message provided to the vehicle driver to alert the vehicle driver about the condition so that the vehicle driver can pay extra attention. Alternatively, the precautionary action may consist of an actual modification of the operation or control of the vehicle, such as braking, accelerating, or maneuvering the vehicle, or activating a sensor. Alternatively, the precautionary action may include providing an input to an algorithm that also processes inputs from other sensors for taking such actions. Alternatively, the precautionary action may be adjustment of sensitivities of other ADAS applications such as increasing the control authority and sensitivity of a lane departure warning or control system to lane edge approach and violation. In another alternative, the precautionary action may include a combination of any of these aforementioned actions.

According to further aspects, a precautionary action system installed in a vehicle uses this database, or a database derived therefrom, in combination with a positioning system, to determine when the vehicle is at a location that corresponds to the location identified as being difficult, hazardous or challenging. When the vehicle is at or approaching such a location, the precautionary action is taken, such as providing a warning to the vehicle operator to alert the vehicle operator about the condition.

### BRIEF DESCRIPTION OF THE DRAWINGS

Figure 1 is a flowchart of a process that uses a database that represents a road network to identify potentially hazardous conditions.
Figure 2 is a diagram of a data record formed by the process of Figure 1.
Figure 3 is a diagram of a vehicle system that uses data produced by the process of Figure 1.
Figure 4 is a flowchart of a process performed by the system of Figure 3.
Figure 5A is an illustration of a potentially hazardous condition on a portion of a road network, specifically a curve in which the superelevation (banking) is sloping outward.
Figure 5B is an illustration of how the road in Figure 5A is represented by data contained in a map database, such as the map database in Figure 2.
Figure 6 is a flowchart of a process that uses a database that represents a road network to identify conditions such as the one shown in Figure 5A.
Figure 7 is an illustration of a potentially hazardous condition on a portion of a road network, specifically an intersection located at the bottom of a hill.
Figure 8 is a flowchart of a process that uses a database that represents a road network to identify conditions such as the one shown in Figure 7.
Figure 9A is an illustration of a potentially hazardous condition on a portion of a road network, specifically a curve with a decreasing radius of curvature.
Figure 9B is an illustration of how the portion of a road network shown in Figure 9A is represented as data in a database, such as the map database in Figure 2.
Figure 10 is a flowchart of a process that uses a database that represents a road network to identify conditions such as the one shown in Figure 9A.
Figure 11A is an illustration of a potentially hazardous condition on a portion of a road network, specifically a curve located along a downhill portion of a road.
Figure 11B is an illustration of how the portion of a road network shown in Figure 11A is represented as data in a database, such as the map database in Figure 2.
Figure 12 is a flowchart of a process that uses a database that represents a road network to identify conditions such as the one shown in Figure 11A.
Figure 13 is an illustration of a potentially hazardous condition on a portion of a road network, specifically a stop sign located at the bottom of a hill.
Figure 14 is a flowchart of a process that uses a database that represents a road network to identify conditions such as the one shown in Figure 13.
Figure 15 is an illustration of a potentially hazardous condition on a portion of a road network, specifically stop signs located along a curved portion of a road.
Figure 16 is a flowchart of a process that uses a database that represents a road network to identify conditions such as the one shown in Figure 15.
Figure 17 is an illustration of a potentially hazardous condition on a portion of a road network, specifically a blind intersection.
Figure 18 is a flowchart of a process that uses a database that represents a road network to identify conditions such as the one shown in Figure 1.
Figure 19A is an illustration of a potentially hazardous condition on a portion of a road network, specifically a curved section of road that has a lower speed limit than the preceding straight road section.
Figure 19B illustrates how the road segments shown in Figure 19A are represented by data contained in a map database.
Figure 20 is a flowchart of a process that uses a database that represents a road network to identify conditions such as the one shown in Figure 19A.
Figure 21A is an illustration of a portion of a road network with road lanes of normal width.
Figure 21B is an illustration of a portion of a road network with road lanes of narrow width.
Figure 21C is an illustration of a potentially hazardous condition on a portion of a road network, specifically road lanes of unusually narrow width.
Figure 22 is a flowchart of a process that uses a database that represents a road network to identify conditions such as the one shown in Figure 21C.
Figure 23 is an illustration of a potentially hazardous condition on a portion of a road network, specifically an intersection located over a hill.
Figure 24 is a flowchart of a process that uses a database that represents a road network to identify conditions such as the one shown in Figure 23.
Figure 25A is an illustration of a portion of a road network where roads merge with a sufficient merge lane.
Figure 25B shows how the roads depicted in Figure 25A are represented as data in a database.
Figure 25C is an illustration of a potentially hazardous condition on a portion of a road network, specifically where roads merge without a sufficient merge lane.
Figure 25D shows how the roads depicted in Figure 25C are represented as data in a database.
Figure 25E is an illustration of another portion of a road network where roads merge without a sufficient merge lane.
Figure 26 is a flowchart of a process that uses a database that represents a road network to identify conditions such as the one shown in Figures 25C and 25E.
Figure 27 is an illustration of a system for obtaining user feedback about locations of known hazardous conditions throughout a road network.
Figure 28 is a flowchart of a process that uses a database that represents the road network in Figure 27 to identify locations known by members of the public where a hazardous condition exists.

### DETAILED DESCRIPTION OF THE DESCRIPTION OF THE PRESENTLY PREFERRED EMBODIMENTS

### I. INTRODUCTION

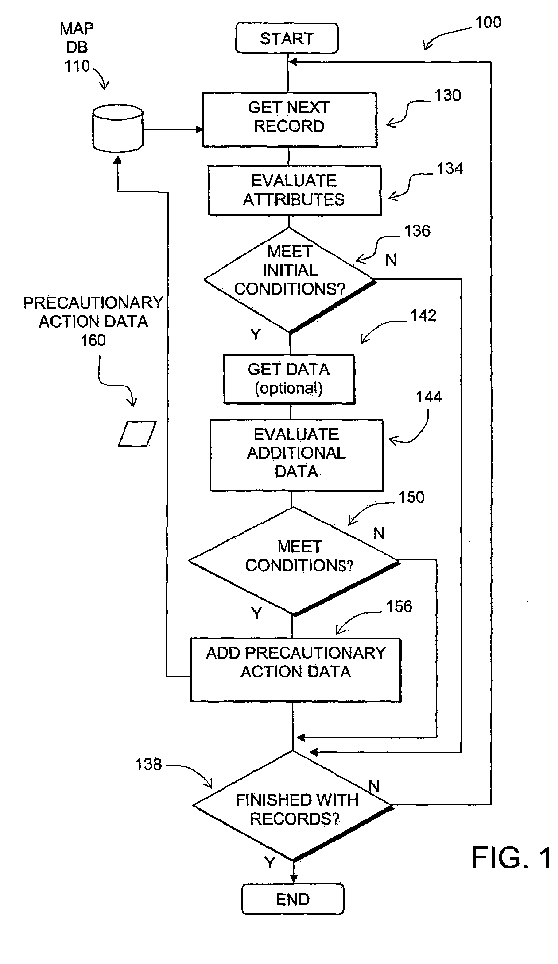

Figure 1 is a flowchart of a process 100. The process 100 is performed by a software program or routine that is run on a suitable computing platform, such as a database server, PC or plurality of PCs coupled together for parallel computing applications.

The process 100 uses a database 110 that contains data that represents the road network in a region. The region may be a country, such as the United States, Germany, France or Korea. Alternatively, the region may include several countries or an entire continent. According to another alternative, the region may include only a portion of a country, such as a state or several states or metropolitan areas.

The process 100 is performed by a map developer, such as NAVTEQ Corporation. Alternatively, the process 100 may be performed by another entity that has access to an editable version of a map database 110. For example, the process may be performed by a customer or licensee of NAVTEQ, such as a manufacturer of navigation systems or active safety systems, or by a traffic information services company or by a government office at any level.

The database 110 is in a format that can be edited. That is, new or updated information can be added to the database 110. Alternatively, the database 110 is in a format such that new information can be combined with the original data to form a new database that includes both the original data and new data. In one embodiment, the database is in an Oracle spatial format. Alternatively, the database may be in a delivery format, such as GDF (Geographic Data File), SIF (Standard Interchange Format), or other formats, including proprietary formats.

As stated above, the database 110 contains data that represents the road network in the region. The database 110 contains information such as the locations (geographic coordinates, including altitude) of roads and intersections, road names, the three-dimensional shape of the roads including curvature, slope and bank, speed limits along roads, turn restrictions at intersections, addresses or address ranges along roads, the number of lanes each road has, lane width, lane markings, functional classes of roads, the locations of medians, and so on. The database may also contain information about other geographic features, such as bodies of water, parks, administrative areas (including municipal, state and country boundaries), and locations of points of interest, such as businesses, hospitals, police stations, and so on.

In Figure 1, the process 100 examines each data record that represents a geographic feature, such as a link (or road segment) or intersection, to determine whether it represents a location or leads to a location where a potentially difficult or hazardous condition exists. The kinds of potentially difficult or hazardous conditions may include, but are not limited to, a turn with a decreasing radius of curvature, a turn where the superelevation (bank angle) is insufficient or in the wrong direction, i.e., banked away from the curve instead of into it, a downhill segment that has an intersection at the bottom of the hill, a downhill segment that has a stop sign or stoplight at the bottom of the hill, a sharp curve on a downhill slope, a curve that has a stop sign or stoplight somewhere along the curve, a blind intersection either because it is in a turn or over a hill, an unusually narrow lane or road, a lane merge, a road entrance with no stop sign or stoplight that has no merge lane, and a curve with a lower speed recommendation than the preceding straight segment speed limit.

The process 100 may employ a staged or multiple step process wherein combinations and/or thresholds of data are evaluated to determine whether a hazardous condition exists. With such a process, a comprehensive evaluation of an entire region can be performed by evaluating first each instance of data that represents a type of feature for an initial set of conditions, and then evaluating that instance of data in combination with other data only if the initial conditions are met. As an example, the process 100 may examine in turn each data record in the entire database that represents each road segment (also referred to as a "link"), and in each direction of travel. In one step, a data record that represents a link or road segment is read from the database 110 (Step 130). Adjacent road segments records may also be read. This road segment record includes data attributes that indicate various features of the represented road segment. The attributes are evaluated to determine whether the represented road segment might have or lead to a difficult or hazardous driving condition (Step 134). The attributes that are evaluated depend on the type of difficult or hazardous condition the process 100 is attempting to find. For example, to locate curves that exceed a certain threshold of severity, each curve is inspected for its curvature values, length of the curve, and other attributes of the curve. In another example, in order to locate intersections at the bottom of a hill, the altitude of the endpoints of the road segment or adjacent road segments are compared to determine whether the road segment is on a hill. On the other hand, to determine whether a blind intersection is in a turn, the shape points or curvature of the road segment are evaluated to determine whether the road segment is part of a curve or at the end of a curve. From an evaluation of this information, it can be determined whether the represented road segment and its adjacent road segments might be part of, or lead to, a location of a potentially hazardous condition. If the represented feature is determined not to meet the initial conditions, the process 100 proceeds to a step in which it is determined whether all the records that represent that feature in the database have been examined (Steps 136 and 138). If there are more records to examine, the process 100 proceeds to get the next record (Step 130) and continues.

Referring back to Step 136, if the represented feature meets the defined initial conditions, the process 100 proceeds to evaluate additional data. If necessary, additional data is obtained from the database 110 (Step 142). The additional data may include the data records that represent features located nearby the feature under initial evaluation.
For example, the additional data may include the data records for nearby features, such as successor road segments that connect to the road segment under initial evaluation. According to another alternative, the additional data may include other data associated with the feature under initial evaluation. As an example, in order to find turns where the superelevation is in the wrong direction, the process 100 will first evaluate whether the road segment is curved (e.g., in Steps 134 and 136) and then, if it is, evaluate whether the superelevation data associated with the road segment indicates that the superelevation of the road in the curved section is in the wrong direction (e.g., in Steps 144 and 150).

The additional data is evaluated (Step 144) and if the additional data does not meet the conditions, the feature under evaluation does not have the hazardous condition. In this case, the process 100 proceeds to the step in which it is determined whether all the records in the database have been examined (Step 138) and if there are more records to examine, the process 100 proceeds to get the next record (Step 130).

Referring back to Step 150, if evaluation of the additional data indicates that the conditions are met, a hazardous condition is determined to be present. In this case, the process 100 adds precautionary action data 160 to the database 110 (Step 156). The precautionary action data 160 indicates the presence of a feature in the road network where a precautionary action may be taken. After the precautionary action data 160 is added to the database 110, the process 100 proceeds to the step in which it is determined whether all the road segment records in the database have been examined (Step 138) and if there are more segment records to examine, the process 100 proceeds to get the next segment record (Step 130).

The process 100 ends when it is determined that all the road segment records have been examined (Step 138).

It is noted that the process 100, above, performs a data mining function. The existence of the hazardous condition is derived from data already collected and present in the database. The process evaluates each data item to determine if it exceeds a defined hazardous threshold value, or the process evaluates multiple data items in the original database to determine whether when combined, those data items constitute a hazardous condition. By evaluating these individual and multiple data items, a determination is made whether these data items describe the condition of interest, the hazardous condition. If these data items do describe the condition, a new data item, i.e., the precautionary action data, is added to the database.

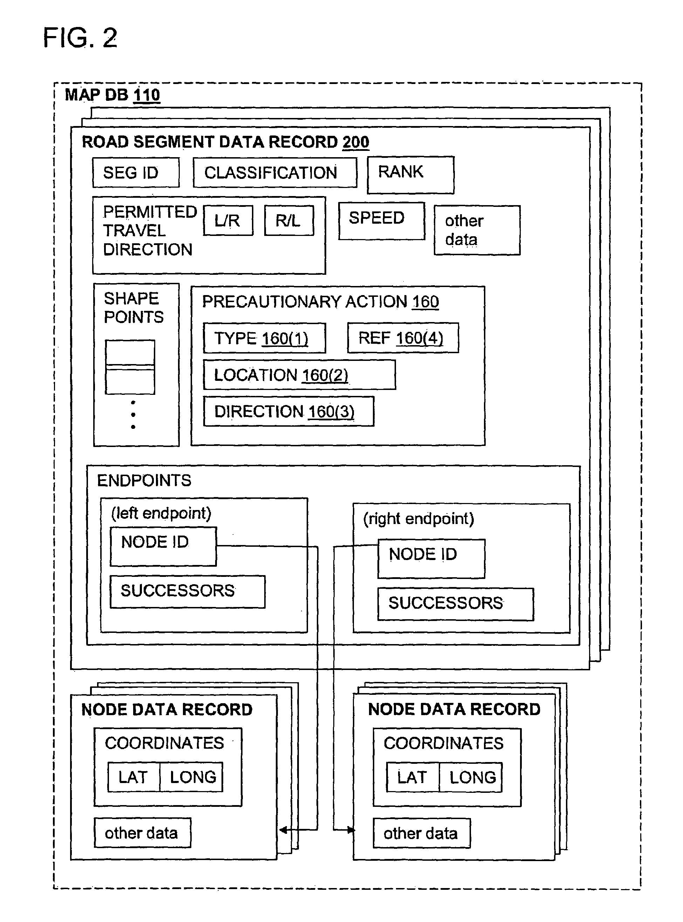

Figure 2 is a diagram that shows a data record 200 in the database 110. The data record 200 represents a road segment located in a geographic region. As explained above, the geographic region may include an entire country or continent. Accordingly, the database 110 includes many data records like those shown in Figure 2.

The data record 200 shown in Figure 2 is exemplary and shows only one way to represent a road segment. Databases may represent road segments in various different ways and may include different kinds of information. The present invention is not limited to any particular way of representing roads.

Referring to Figure 2, various data are associated with the data record 200 that represents a road segment. These various data indicate features or attributes of the represented road segment. For example, associated with the data record is data that indicates the permitted direction(s) of travel. Also associated with the road segment record 200 are data that indicate a speed limit, a classification of the road segment (i.e., the type of road, such as controlled access, etc.), a rank (e.g., 1-4), the endpoints of the road segment, shape points (i.e., locations along the road segment between its endpoints). Also associated with the road segment records is data that indicate the successors at each endpoint. Successors are those road segments that connect to the represented road segment at each of its endpoints. The segment record 200 may identify these successors by reference to the data records that represent the successors.

In Figure 2, the database 110 also includes precautionary action data 160. The precautionary action data 160 is the data added to the database 110 by the process 100 in Figure 1. In Figure 2, the precautionary action data 160 is shown as added to the road segment record 200. It should be understood that the process 100 adds precautionary action data 160 with respect to only certain records, i.e., records that represent those roads segments that meet the conditions identified by the process. Accordingly, the database 110 will contain data records that represent road segments that contain the precautionary action data 160 and other data records that represent road segments that do not contain the precautionary action data 160.

In the embodiment shown in Figure 2, the precautionary action data 160 is associated with the road segment identified as having a potentially hazardous condition located thereon. In this embodiment, the precautionary action data 160 includes several components. One component 160(1) indicates a condition type. This condition type 160(1) indicates the type of condition about which a precautionary action is to be taken, which in this case is an intersection that is located at a bottom of a hill. This condition type 160(1) component is used when different conditions are identified in the database 110 about which precautionary action may be taken.

Another component of the precautionary action data 160 is the precautionary action location 160(2). The precautionary action location 160(2) indicates where along the represented road segment a precautionary action should be taken. The precautionary action location 160(2) data may include multiple entries. For example, the precautionary action location 160(2) may indicate where a warning may be provided to a vehicle driver to advise the driver about the upcoming potentially hazardous condition. The warning location 160(2) may indicate a distance (e.g., x meters) from the potentially hazardous condition. The location 160(2) is determined based on an analysis of factors, such as grade, curvature, speed limit, road classification, etc. These factors may be determined from other data contained in the database 110. According to one example, the location 160(2) may indicate that a warning should be provided at a location 400 meters along the road segment from the hazardous condition.

The precautionary action location 160(2) may also indicate where a vehicle control action should be taken, such as tightening the seatbelts, pre-loading or engaging the brakes, tightening sensitivities of lane departure warning systems or stability control systems, etc. This may be a different location from where the precautionary warning is provided and would be based on a different analysis of factors.

Another component of the precautionary action data 160 is direction data 160(3).
The direction data 160(3) indicates the direction along the represented road segment where the precautionary action should be taken. Note that the database 110 may indicate a direction along a road segment as positive or negative based on the relative latitude and longitude of the road segment endpoints. Accordingly, the downhill direction may be indicated as positive or negative.

Another component of the precautionary action data 160 is a reference 160(4). In this case, the reference 160(4) indicates the actual location of the hazardous condition, e.g., the intersection at the bottom of the hill, the turn where the superelevation is in the wrong direction, etc. The reference 160(4) may refer to another data record that represents the actual location of the hazardous condition.

The precautionary action data 160 described in Figure 2 is one way that this data may be included in a database that represents a geographic region. There are alternative ways to include the precautionary action data. For example, the precautionary action data may be included as separate data records in the database 110. If included as separate data records, the precautionary action data may be associated with the road segments to which they apply by pointers or other suitable data references. Alternatively, the precautionary action data may be associated with node data records. Various other ways exist and the present invention is not intended to be restricted to any specific implementation.

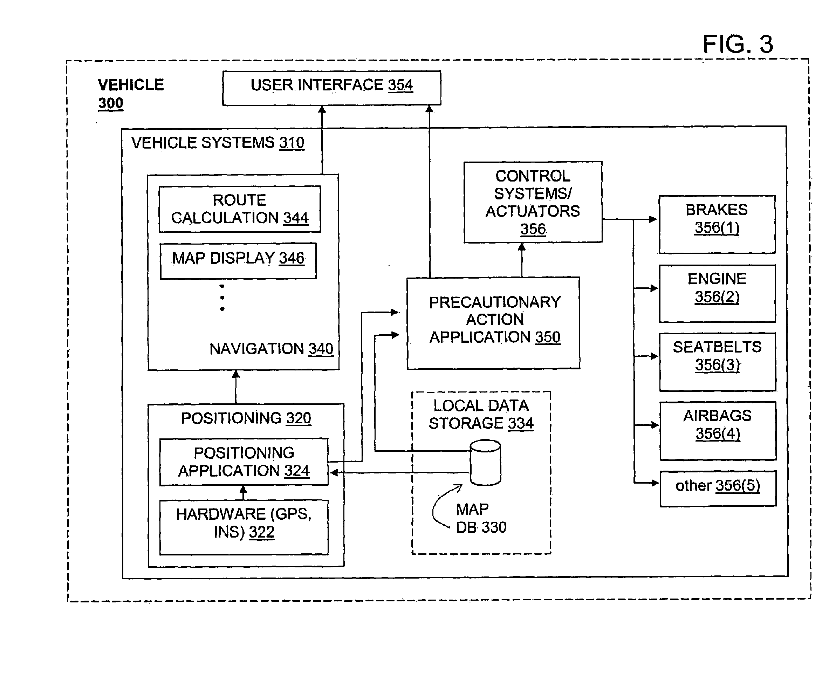

Figure 3 is a diagram depicting components of a vehicle 300. The vehicle 300 is operated on a road network, such as the road network represented by the database 110 in Figure 2. The vehicle 300 may be an automobile, truck, bicycle, motorcycle, etc.

The vehicle 300 includes various systems 310. In this embodiment, the vehicle systems 310 include a positioning system 320. The positioning system 320 determines the position of the vehicle 300 on the road network. The positioning system 320 includes appropriate hardware and software to determine the position of the vehicle 300. For example, the positioning system may include hardware 322 that includes a GPS unit, an accelerometer, wheel speed sensors, etc. The positioning system 320 also includes a positioning application 324. The positioning application 324 is a software application that uses outputs from the positioning system hardware 322 and information from a map database 330. The positioning application 324 determines the position of the vehicle 300 with respect to the road network, including the location of the vehicle 300 along a road segment and a direction of travel of the vehicle along the road segment.

In one embodiment, the map database 330 is located in the vehicle. In an alternative embodiment, the map database 330 may be located remotely and accessed by the vehicle systems 310 using a wireless communication system. In yet another embodiment, part of the map database 330 may be located locally in the vehicle and part of the map database 330 may be located remotely.

The map database 330 is stored on a computer readable medium 334. The computer-readable medium may be implemented using any suitable technology. For example, the computer readable medium may be a DVD disk, a CD-ROM disk, a hard disk, flash memory, or any other medium, or a plurality of media.

The map database 330 includes data that represents the geographic region in which the vehicle 300 is being operated. The map database 330 may represent the same geographic region as the database 110 in Figure 1, or alternatively, the map database 330 may represent only a portion of the region represented by the database 110.

The map database 330 used by the vehicle systems 310 may be in a different format from the database 110 in Figure 1. The map database 330 is formed or derived from the database 110 by a compilation process that organizes and presents the data in a form and format that specifically facilitates its use for performing specific functions. For example, the map database 330 may be separated into different collections of data that are used for specific functions, such as vehicle positioning, route calculation, map display, route guidance, destination selection, and so on. The map database 330 may also be organized into groupings spatially. One kind of compiled database format is disclosed in U.S. Pat. No. 5,968,109, the entire disclosure of which is incorporated by reference herein. Various other compiled database formats exist, including proprietary formats, and the disclosed embodiment(s) are not limited to any particular format.

Included among the vehicle systems 310 in Figure 3 is a navigation system 340.
The navigation system 340 uses outputs from the positioning system 320 and data from the map database 330 to provide navigation-related features to a vehicle user, e.g., the vehicle operator or passenger. The navigation system 340 includes applications for route calculation 344, map display 346, as well as possibly other applications. The navigation system 340 provides the navigation-related features to the vehicle user via a user interface 354. (The navigation system 340 is optional and may be omitted.)

Also included among the vehicle systems 310 is a precautionary action application 350. The precautionary action application 350 uses outputs from the positioning system 320 and data from the map database 330 to take precautionary actions, such as provide warnings to the vehicle operator. The precautionary action application 350 provides the warning to the vehicle operator via the user interface 354.

Figure 3 also shows that precautionary action application 350 provides an output to vehicle control systems and actuator 356. The vehicle control systems and actuator are operatively connected to various vehicle mechanical systems, such as the vehicle's brakes 356(1), engine 356(2), seatbelts (including tensioners) 356(3), airbags 356(4), stability control algorithms, as well as other system systems 356(5).

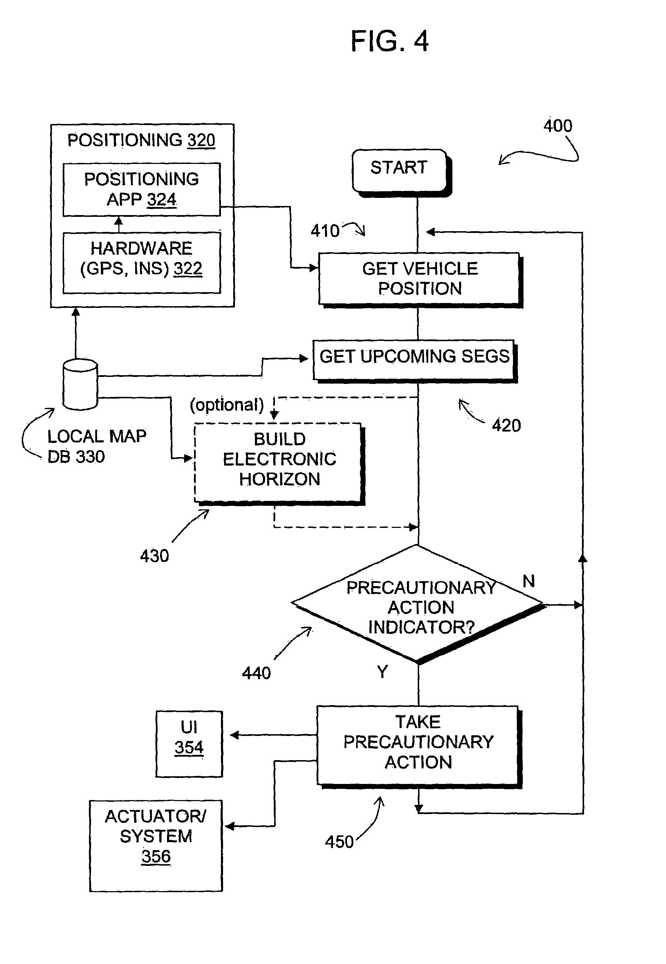

Figure 4 is a flowchart 400 showing operation of the precautionary action application 350 (in Figure 3). As the vehicle 300 (in Figure 3) is being operated on a road, the precautionary action application 350 obtains the current vehicle position from the positioning system 320 (Step 410). (During vehicle operation, the positioning system 320 using data from the map database 330 to continuously determine the current geographic position of the vehicle 300.) The positioning system 320 provides the precautionary action application 350 with data that indicates the current vehicle position with respect to the road network as represented by the map database 330. Specifically, the location of the vehicle along a road segment and the direction of travel of the vehicle along the road segment are determined and provided to the precautionary action application 350.

Next, the process 400 obtains data from the map database 300 that represents the geographic features (i.e., roads, intersections, etc.) at the current location of the vehicle and in the direction in which the vehicle is heading (Step 420). In one embodiment, an electronic horizon is used (Step 430). Building an electronic horizon and using it to provide warnings are disclosed in U.S. Pat. Nos. 6,405,128 and 6,735,515 and U.S. Pat. App. Ser. No. 11/400, 151, the entire disclosures of which are incorporated by reference herein. Using an electronic horizon and/or the inventions disclosed in these patents and pending patent application is optional and the disclosed process 400 is not limited to using the electronic horizon technology.

After obtaining data from the map database 300 that represents the geographic features at the current location of the vehicle and in the direction in which the vehicle is heading, the process 400 includes the step of examining the data to determine whether any precautionary action data (160 in Figure 2) is associated with the represented geographic features around the vehicle's current location (Step 440). If there is no precautionary action data associated with the represented geographic features, the process 400 loops back to get a new current vehicle position (Step 410). On the other hand, if there is precautionary action data associated with the represented geographic features, the process 400 takes a precautionary action (Step 450). The precautionary action may be a warning provided to the vehicle operator when the vehicle is at the location (i.e., 160(2) in Figure 2) indicated by the precautionary action data. The warning may be provided via the user interface 354. The warning may be an audible warning message or a visual warning.

The precautionary action is not limited to warnings, but may also include other actions. For example, vehicle systems 356, such as the brakes, engine or transmission, can be readied for a quick deceleration or stop. In addition, the seatbelts may be tightened or the airbags set to deploy. As explained above, to facilitate these kinds of actions, additional information may be added to the warning data 160 (in Figure 2) to indicate the type of action as well as the location where the action should be taken.

Referring still to Figure 4, after taking the precautionary action, the process 400 loops back to get a new current vehicle position (Step 410).

### II. SPECIFIC HAZARDS

### A. INSUFFICIENT SUPERELEVATION

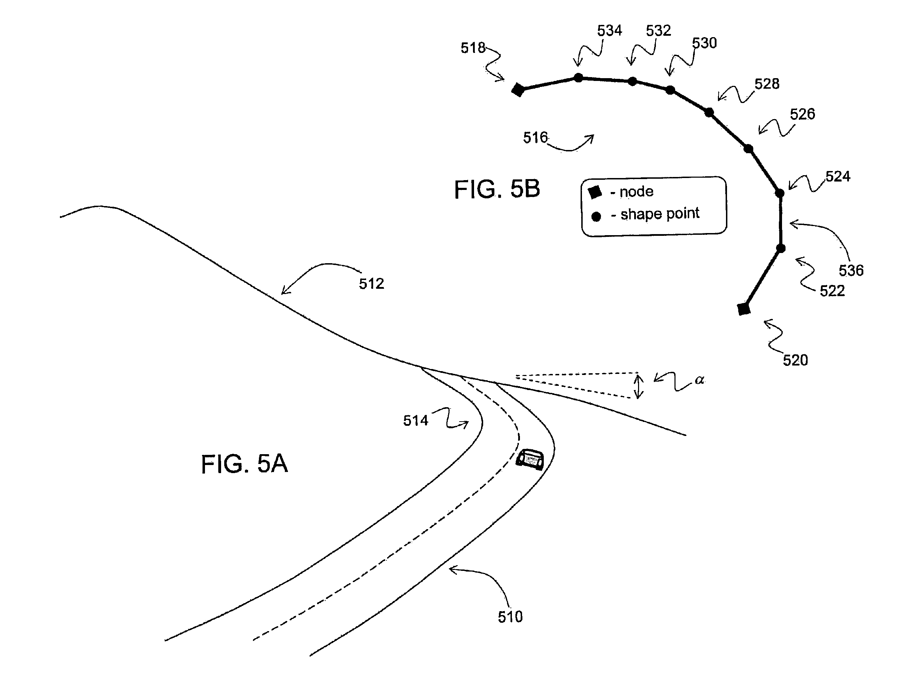

Figure 5A depicts a road segment 510. The road segment 510 is located along a hill 512. The road segment 510 is curved along a portion 514 thereof.

Superelevation refers to a property of the road. Specifically, the superelevation of a road refers to the transverse inclination of the road surface in a curved portion of the road. Superelevation is also referred to as banking. A positive superelevation refers to a transverse inclination in which the outside edge of the road (i.e., the side farthest from the center of the curve radius) is at a higher elevation than the inside edge. A negative superelevation refers to a transverse inclination in which the outside edge of the road is at a lower elevation that the inside edge. A neutral superelevation refers to a road surface in a curve in which the outside and inside edges are at the same elevation. Roads are often constructed with a positive superelevation in curves to counter centrifugal forces that might cause slippage. A road with neutral or negative superelevation in a curve typically cannot be driven as fast as a road with positive superelevation.

Referring to Figure 5A, the road 510 is shown to have a negative superelevation in the curved portion 514. The transverse inclination of the road 510 in the portion 514 is shown to slope away from the curve by an angle α.

Figure 5B is an illustration of how the road 510 in Figure 5A is represented by data contained in a map database (such as the database 110 in Figure 2). The road segment 510 is represented by a data record that defines a line 516 that extends between two endpoints, or nodes, 518 and 520. The location of the road segment 510 is defined by the data indicating the locations (e.g., geographic coordinates, including altitude) of the nodes. The data record that represents the road segment 510 includes data that indicates the shape of the road segment 510. One way to represent the shape of the road segment is to define shape points along the road segment. Shape points indicate the geographic coordinates at points along the road segment between the nodes. In the case of a straight road segment, no shape points are required. However, in the case of a curved road segment, one or more shape points are used to define locations along the road segment. Figure 5B shows several shape points, 522, 524, 526 ... 534, defined along the road segment between the endpoints, i.e., nodes 518 and 520. Thus, the curved road segment 510 in Figure 5A is represented by an approximation comprised of a series of short, straight lines 536, as shown in Figure 5B. (Alternatively, a database may represent a curved road segment by a curved line, such as a spline, clothoid, etc. In this alternative, data that defines the curved line is included in the database.)

The database representation of the curved road segment also includes data that indicates the superelevation along the road segment. One way to do this is to associate superelevation values with shape points defined for the curved road segment. In the case of a curved road represented by curved line, other methods may be used, such as indicating the superelevation at a point along the line.

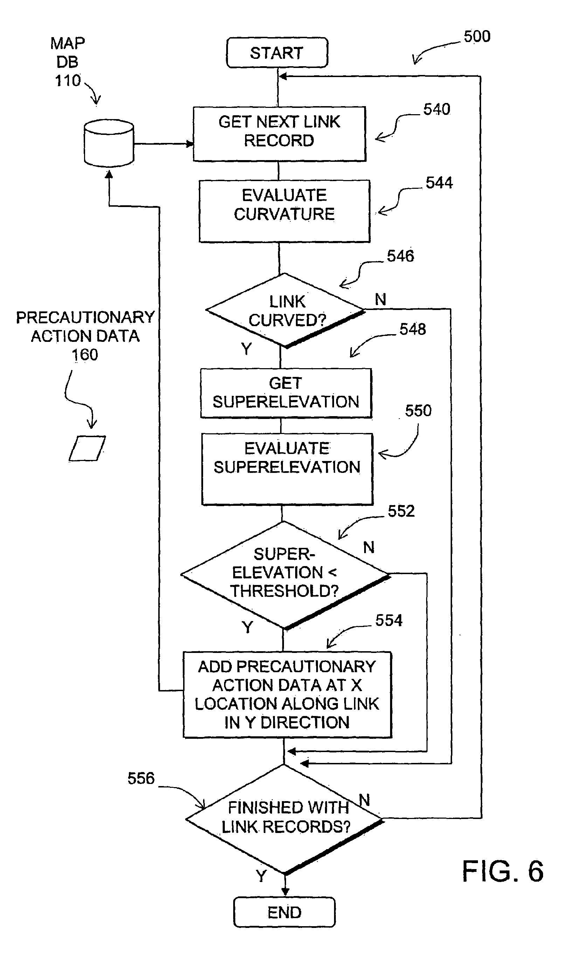

Figure 6 is a flowchart of a process 500. The process 500 is a specific implementation of the process 100 in Figure 1. The process 500 examines each data record that represents a road segment to determine whether it represents one similar to the road segment 510 in Figure 5A. (The process 500 may use a procedure that examines in turn each data record that represents each road segment represented in the entire database.) In one step, a data record that represents a link or road segment is read from the database 110 (Step 540). This road segment record may include data (e.g., shape points) that indicate whether the road segment is curved. This data is evaluated (Step 544). If the represented road segment is not curved, the process 500 proceeds to a step in which it is determined whether all the road segment records in the database have been examined (Steps 546 and 556). If there are more segment records to examine, the process 500 proceeds to get the next segment record (Step 540) and continues.

Referring back to Step 546, if the represented road segment is curved, the process 500 proceeds to obtain the data that indicates the superelevation along the road segment's curved portion (Step 548). This superelevation data is evaluated (Step 550). From an evaluation of the degree of curvature, as well as the superelevation information associated with the segment's curved portion, it is determined whether there exists insufficient superelevation (such as the negative superelevation in the curved portion 514 shown in Figure 5A). If examination of the segment's curvature and superelevation information indicates that there is sufficiently positive superelevation in a curved portion of the road, the process 500 proceeds to the step in which it is determined whether all the road segment records in the database have been examined (Steps 552 and 556) and if there are more segment records to examine, the process 500 proceeds to get the next segment record (Step 540).

Referring back to Step 552, if examination of the segment's curvature and superelevation information indicates that there is insufficient superelevation (i.e., negative, neutral or not sufficiently positive for the degree of curvature) along a curved portion of the road segment, the process 500 adds precautionary action data 160 to the database 110 (Step 554). The precautionary action data 160 indicates the presence of a feature in the road network where a precautionary action may be taken.

In determining whether to add precautionary action data to the database 110, a threshold may be used. For example, a threshold value of zero may be used. With a threshold value of zero, precautionary action data would be added for any curved section that has a negative superelevation. Alternatively, a threshold value may be set at other values, such as -2° or + 2°.

After the precautionary action data 160 is added to the database 110, the process 500 proceeds to the step in which it is determined whether all the road segment records in the database have been examined (Step 556) and if there are more segment records to examine, the process 500 proceeds to get the next segment record (Step 540).

The process 500 ends when it is determined that all the road segment records have been examined (Step 556).

It is noted that the process 500, above, performs a data mining function. The existence of the potentially difficult location, i.e., a curve with insufficient positive superelevation, is derived from data already collected and present in the database. It is noted that the process 500, above, evaluates multiple data items in the original database, to determine whether the condition exists, in this case, insufficient positive superelevation. By evaluating these multiple data items, a determination is made whether these multiple data items describe the condition of interest. If these data items do describe the condition, a new data item, i.e., the precautionary action data, is added to the database.

The above process for determining whether a sufficiently positive superelevation exists can take into account other factors, such as speed limits, road surface, the presence and type of shoulders, and so on. According to this alternative, the threshold may take into account the speed limit along the road segment (which is also stored as data in the database 110.) For example, a road segment with a 55 mph speed limit would have a threshold of+10° defined as sufficiently positive. In the case, precautionary action data would be added if the superelevation were only + 8°. On the other hand, a road segment with a 20 mph speed limit might have a threshold of +1° defined as sufficiently positive so that superelevation of + 8° would not require including precautionary action data.

The precautionary action data 160 added to the database 110 by the process 500 may have the structure or format shown in Figure 2. The precautionary action data 160 that indicates a location of insufficient superelevation is used in a vehicle system as described in connection with Figures 3 and 4.

### B. INTERSECTIONS LOCATED AT HILL BOTTOMS

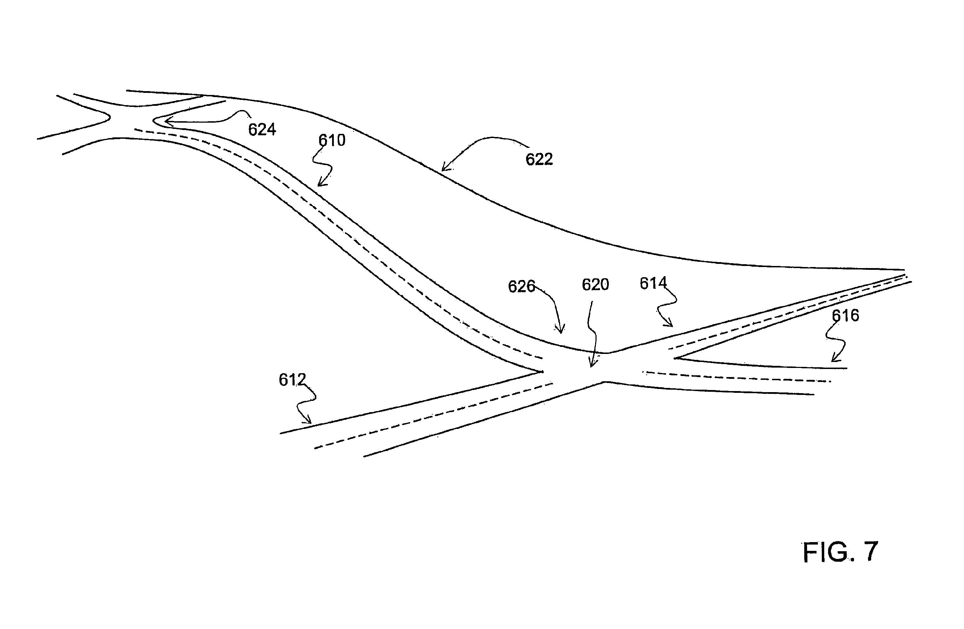

Figure 7 depicts road segments 610, 612, 614 and 616. These road segments meet at an intersection 620. The road segment 610 is located on a hill 622, such that the altitude of one end 624 of the road segment 610 is greater than the altitude at the other end 626, which in this case is the end at the intersection 620.

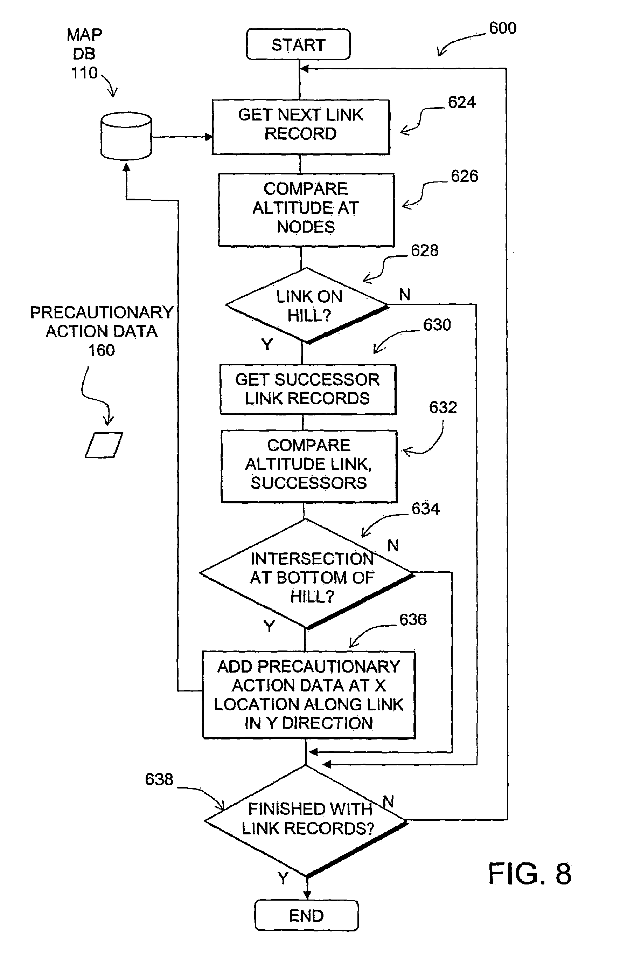

Figure 8 is a flowchart of a process 600. The process 600 is a specific implementation of the process 100 in Figure 1. The process 600 examines each data record that represents a road segment to determine whether it represents one similar to the road segment 610 in Figure 7. (The process 600 may use a procedure that examines in turn each data record that represents each road segment represented in the entire database.) In one step, a data record that represents a link or road segment is read from the database 110 (Step 624). This road segment record includes data attributes that indicate the altitude at each end (i.e., the nodes) of the represented road segment. The altitudes at the ends of the represented road segment are compared (Step 626). From the comparison of altitude information, it can be determined whether the represented road segment is part of a hill. If the represented road segment is not part of a hill, the process 600 proceeds to a step in which it is determined whether all the road segment records in the database have been examined (Steps 628 and 638). If there are more segment records to examine, the process 600 proceeds to get the next segment record (Step 624) and continues.

Referring back to Step 628, if the represented road segment is part of a hill, the process 600 proceeds to obtain the data that represent the successor road segments that connect to the segment's downhill node (Step 630). The altitude of the successor road segments is examined (Step 632). From an examination of location of the segment's downhill node, as well as the altitude information associated with the segment's successor segments, it is determined whether there exists an intersection at the bottom of a hill (similar to the intersection 620 shown in Figure 7). If examination of the location of the segment's downhill node and the altitude information associated with the successor segments indicates that there is no intersection at the bottom of a hill, the process 600 proceeds to the step in which it is determined whether all the road segment records in the database have been examined (Step 638) and if there are more segment records to examine, the process 600 proceeds to get the next segment record (Step 624).

Referring back to Step 634, if examination of the location of the segment's downhill node and the altitude information associated with the successor segments indicates that there is an intersection at the bottom of a hill, the process 600 adds precautionary action data 160 to the database 110 (Step 636). There may be a minimum threshold applied concerning altitude change or slope that constitutes the definition of a slope of sufficient magnitude to be considered a hazardous condition when associated with the intersection. This threshold may be different for different function class roads, surface types, urban or rural locations, or other conditions. The precautionary action data 160 indicates the presence of a feature in the road network where a precautionary action may be taken. After the precautionary action data 160 is added to the database 110, the process 600 proceeds to the step in which it is determined whether all the road segment records in the database have been examined (Step 638) and if there are more segment records to examine, the process 600 proceeds to get the next segment record (Step 624).

The process 600 ends when it is determined that all the road segment records have been examined (Step 638).

The process 600 performs a data mining function to identify the existence of the potentially difficult location, i.e., the intersection located at the bottom of a hill, from data already collected and present in the database. The process 600 evaluates multiple data items in the original database, to determine whether the condition exists, in this case, an intersection located at the bottom of a hill. By evaluating these multiple data items, a determination is made whether these multiple data items describe the condition of interest. If these data items do describe the condition, a new data item, i.e., the precautionary action data, is added to the database.

The precautionary action data 160 added to the database 110 by the process 600 may have the structure or format shown in Figure 2. The precautionary action data 160 is associated with the road segment identified as being on a hill and leading to an intersection located at a bottom of the hill. In this embodiment, the precautionary action data 160 may include components that indicate a condition type, a precautionary action location, where a vehicle control action should be taken, data that indicates the direction along the represented road segment where the precautionary action should be taken and a reference that indicates the location of the intersection at the bottom of the hill.

The precautionary action data 160 that indicates a location of the intersection at the bottom of the hill is used in a vehicle system as described in connection with Figures 3 and 4.

### C. DECREASING RADIUS OF CURVATURE ALONG ROADS

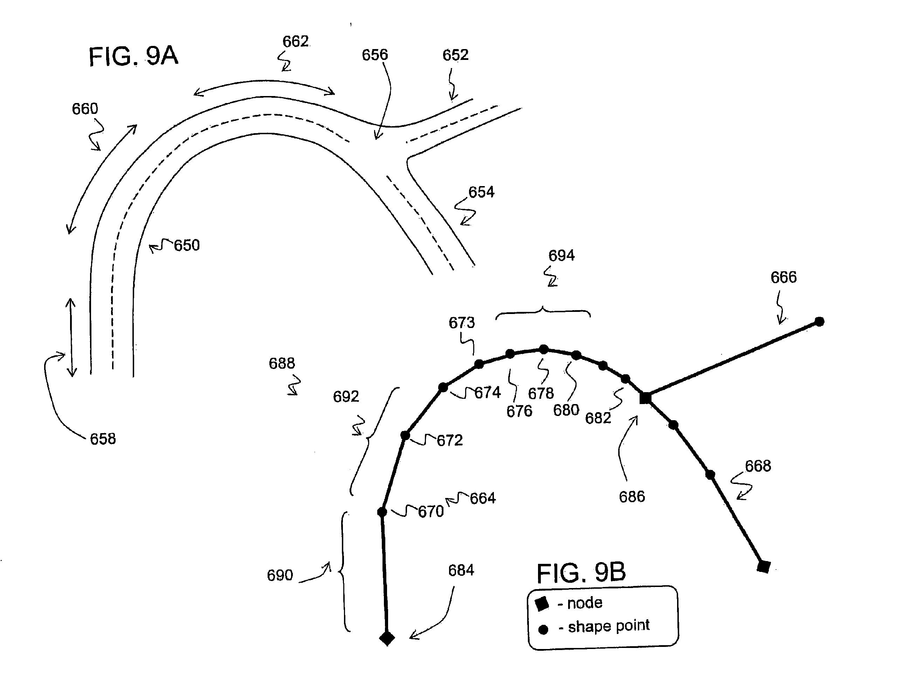

Figure 9A depicts road segments 650, 652 and 654. The road segments 650, 652 and 654 meet at an intersection 656. As shown in Figure 9A, the road segment 650 is curved. The degree by which a road segment curves is described by its curvature. There are various ways to indicate or measure curvature. Curvature refers to a property of a road segment and is an indication of how much the road is curved. As shown in Figure 9A, the road segment 650 starts out with a straight portion 658, followed by a portion 660 that is moderately curved, which is followed a portion 662 that is more curved.

Figure 9B is an illustration of how the road segments in Figure 9A are represented by data contained in a map database (such as the database 110 in Figure 2). The road segments are each represented by a data record that defines a line that extends between two endpoints, or nodes. The location of the road segment is defined by the data indicating the locations (e.g., geographic coordinates, including altitude) of the nodes.
As shown in Figure 9B, the road segment 650 is represented by the line 664, the road segment 652 is represented by the line 666, and the road segment 654 is represented by the line 668.

The data record that represents each road segment includes data that indicates the shape of the road segment, e.g., by defining shape points along the road segment. Figure 9B shows several shape points, 670, 672, 674 .... 682, defined along the road segment between the endpoints, i.e., nodes 684 and 686. Thus, the curved road segment 650 in Figure 9A is represented by an approximation 688 comprised of a series of short, straight lines as shown in Figure 9B. (Alternatively, a database may represent a curved road segment by a curved line, such as a spline, clothoid, etc. In this alternative, data that defines the curved line is included in the database.) As indicated in Figure 9B, in the first portion 690 of the line 688, which corresponds to the straight portion 658 of road segment 650 in Figure 9A, there are no shape points. In the portion 692 of the line 688, which corresponds to the curved portion 660 of the road segment 650 in Figure 9A, there are a series of shape points, 670, 672 and 674. In the portion 694 of the line 688, which corresponds to the more curved portion 662 of the road segment 650 in Figure 9A, there are a series of shape points, 673, 676, 678, 680 and 682, which are more closely spaced together than those in portion 692.

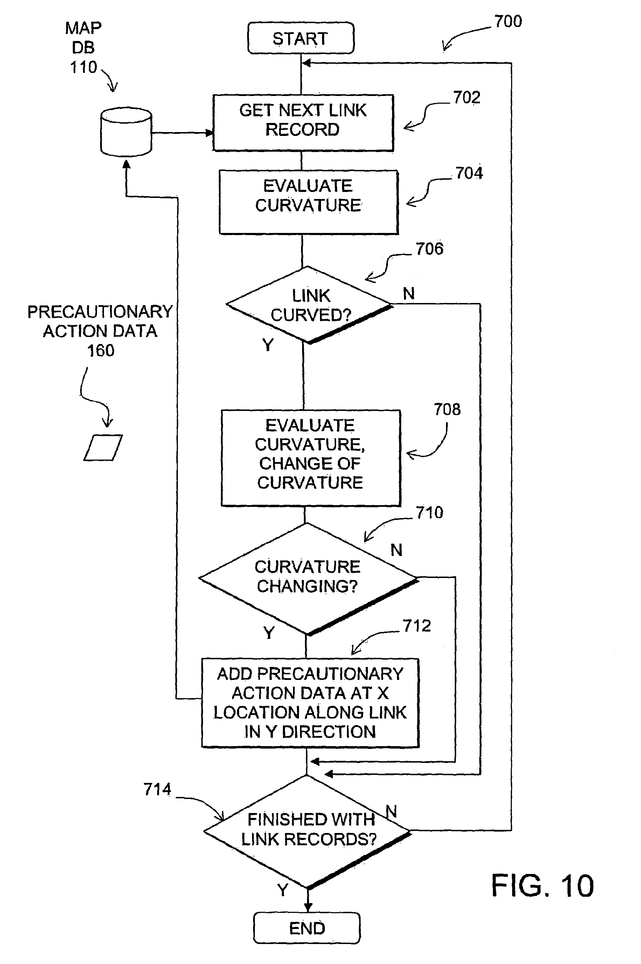

Figure 10 is a flowchart of a process 700. The process 700 is a specific implementation of the process 700 in Figure 1. The process 700 examines each data record that represents a road segment to determine whether it represents one similar to the road segment 650 in Figure 9A. In one step, a data record that represents a link or road segment is read from the database 110 (Step 702). This road segment record may include data (e.g., shape points) that indicate whether the road segment is curved. This data is evaluated (Step 704). If the represented road segment is not curved, the process 700 proceeds to a step in which it is determined whether all the road segment records in the database have been examined (Steps 706 and 714). If there are more segment records to examine, the process 700 proceeds to get the next segment record (Step 702) and continues.

Referring back to Step 706, if the represented road segment is curved, the process 700 proceeds to evaluate the data that indicates the curvature along the road segment's curved portion to determine whether the curvature changes, i.e., increases, in a given direction (Step 708). More specifically, the process evaluates the curvature to determine if curvature is approximately constant for a given length, and then increases in curvature to a higher value for another length. The process may use a threshold by which the curvature is required to increase to determine that the condition is met. The process may use the spacing between shape points to determine whether the curvature increases along the length of a road segment. From an evaluation of the degree of curvature, as well as the amount by which the curvature changes, it is determined whether there exists a sufficiently large change in curvature to constitute a potentially hazardous condition (such as the change in curvature between the sections 660 and 662 shown in Figure 9A). If examination of the segment's curvature indicates that there is not a sufficiently large change in curvature between adjacent portions of the road, the process 700 proceeds to the step in which it is determined whether all the road segment records in the database have been examined (Step 714) and if there are more segment records to examine, the process 700 proceeds to get the next segment record (Step 702).

Referring back to Step 710, if examination of the segment's curvature between adjacent sections indicates that there is a sufficiently large change between sections, the process 700 adds precautionary action data 160 to the database 110 (Step 712). The precautionary action data 160 indicates the presence of a feature in the road network where a precautionary action may be taken.

After the precautionary action data 160 is added to the database 110, the process 700 proceeds to the step in which it is determined whether all the road segment records in the database have been examined (Step 714) and if there are more segment records to examine, the process 700 proceeds to get the next segment record (Step 702).

The process 700 ends when it is determined that all the road segment records have been examined (Step 714).

The process 700 performs a data mining function to determine the existence of the potentially difficult location, i.e., a significant increase in curvature between adjacent road sections along a curve, from data already collected and present in the database. The process 700 evaluates multiple data items in the original database to determine whether the condition exists, in this case, adjacent road sections in which the curvature increases by a significant amount. By evaluating these multiple data items, a determination is made whether these multiple data items describe the condition of interest. If these data items do describe the condition, a new data item, i.e., the precautionary action data, is added to the database.

The above process for determining whether a sufficiently large increase in curvature exists between adjacent road sections can take into account other factors, such as speed limits, road surface, the presence and type of shoulders, and so on. According to this alternative, the threshold may take into account the speed limit along the road segment (which is also stored as data in the database 110.)

The precautionary action data 160 added to the database 110 by the process 700 may have the structure or format shown in Figure 2. The precautionary action data 160 may indicate the type of condition about which a precautionary action is to be taken, which in this case is a significant increase in curvature between adjacent road sections along a curve. The precautionary action data 160 may also indicate the precautionary action location 160(2), i.e., where along the represented road segment a precautionary action may be taken. The precautionary action location data may include multiple entries. For example, the precautionary action location 160(2) may indicate where a warning may be provided to a vehicle driver to advise the driver about the upcoming condition, i.e., the significant increase in curvature between adjacent road sections along a curve. In the case of a significant increase in curvature between adjacent road sections along a curve, the warning location 160(2) may indicate a distance (e.g., x meters) from the changing curvature. The location 160(2) is determined based on an analysis of factors, such as the superelevation, curvature, the change of curvature, the speed limit along the represented road segment, the road classification, and possibly other factors. These factors may be determined from other data contained in the database 110. According to one example, the location 160(2) may indicate that a warning should be provided at a location 400 meters along the road segment from the curve.

The precautionary action data 160 that indicates a location of an increase in curvature between adjacent road sections along a curve is used in a vehicle system as described in connection with Figures 3 and 4.

### D. CURVES ALONG DOWNHILL ROADS

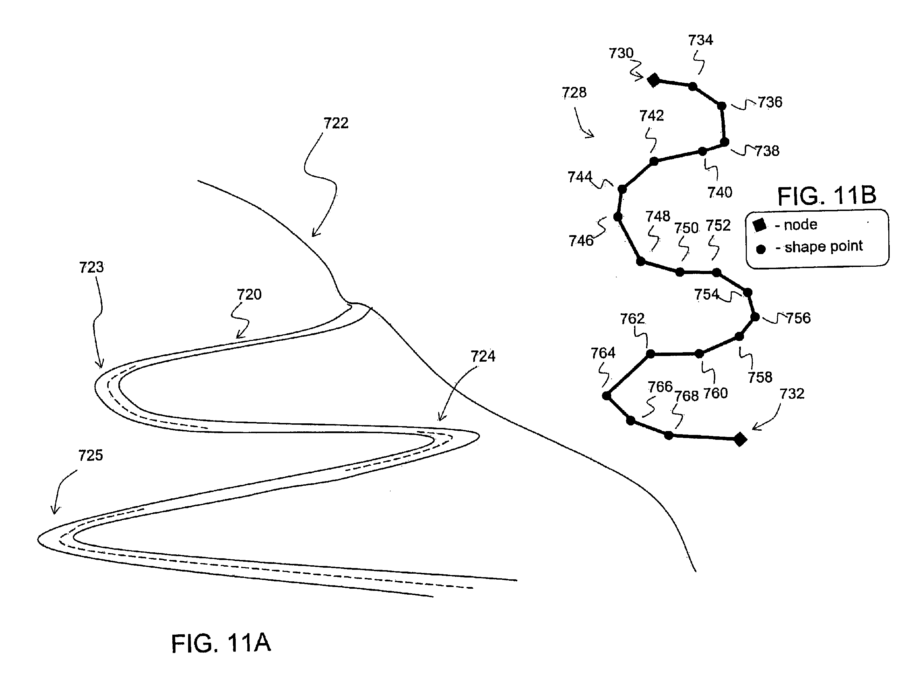

Figure 11A depicts a road segment 720. The road segment 720 is located along a hill 722. Located along the road segment 720 are several curved sections, 723, 724 and 725.

Figure 11B is an illustration of how the road segment 720 in Figure 11A is represented by data contained in a map database (such as the database 110 in Figure 2). Each road segment is represented by a data record that defines a line that extends between two endpoints, or nodes. As shown in Figure 11B, the road segment 720 is represented by a line 728 between node 730 and node 732.

As explained above, in the case of a curved road segment, one or more shape points are used to define locations along the road segment. Figure 11B shows several shape points, 734, 736, 738 .... 768, defined along the road segment between the endpoints, i.e., nodes 730 and 732. Thus, the curved road segment 720 in Figure 11A is represented by an approximation 728 comprised of a series of short, straight lines as shown in Figure 11B. (Alternatively, a database may represent a curved road segment by a curved line, such as a spline, clothoid, etc. In this alternative, data that defines the curved line is included in the database.)

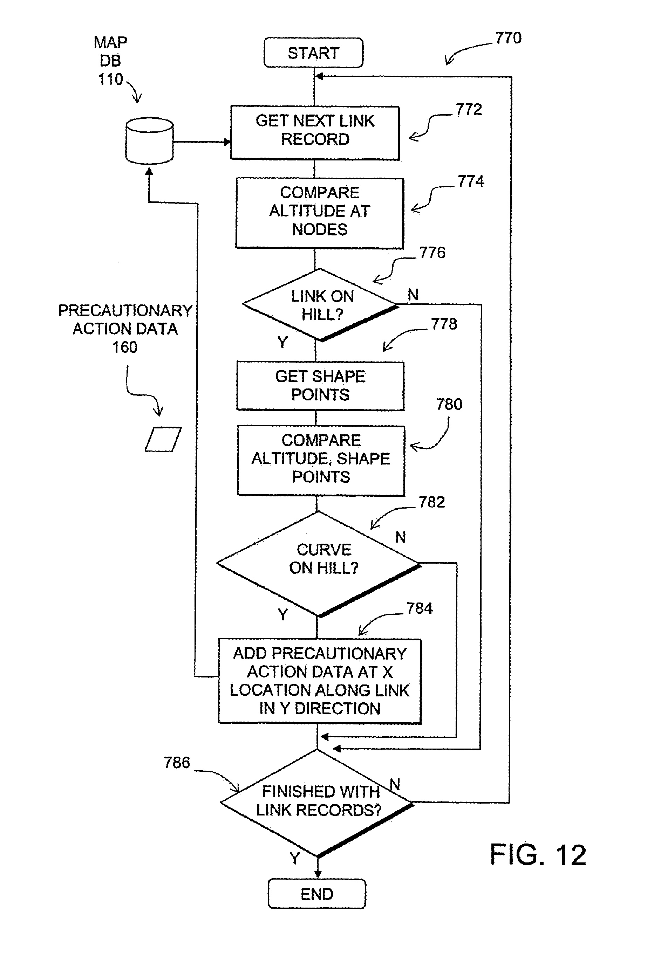

Figure 12 is a flowchart of a process 770. The process 770 is a specific implementation of the process 100 in Figure 1. The process 770 examines each data record that represents a road segment to determine whether it represents one similar to the road segment 720 in Figure 11A. The process 770 may use a procedure that examines in turn each data record that represents each road segment represented in the entire database. In one step, a data record that represents a link or road segment is read from the database 110 (Step 772). This road segment record includes data attributes that indicate the altitude at each end (i.e., the nodes) of the represented road segment. The altitudes at the ends of the represented road segment are compared (Step 774). From the comparison of altitude information, it can be determined whether the represented road segment is part of a hill, where the definition of what altitude change is sufficient to identify it as a hill is a threshold value set in the process. Alternatively, the process 770 may evaluate slope or grade information stored in the database instead of a change in altitude. In this case the definition of what slope or grade is sufficient to identify it as a hill is a threshold value set in the process. If the represented road segment is not part of a hill, the process 770 proceeds to a step in which it is determined whether all the road segment records in the database have been examined (Steps 776 and 786). If there are more segment records to examine, the process 770 proceeds to get the next segment record (Step 772) and continues.

Referring back to Step 776, if the represented road segment is part of a hill, the process 770 proceeds to obtain the data that represent the shape of the road segment, e.g. the shape points (Step 778). The shape points are evaluated to determine whether the road segment is curved, where the definition of what curvature value is sufficient to identify it as a curve is a threshold value set in the process (Step 780). Alternatively, curvature may be stored directly in the database as an equation of a spline, clothoid or other mathematical description. From an examination of the segment's altitude change, as well as the segment's shape points, it is determined whether there exists a curve along a downhill portion of the road segment (similar to the sections, 723, 724 or 725 shown in Figure 11A). If examination of the location of the segment's altitude information and shape points indicates that there are no curves along a downhill portion, the process 770 proceeds to the step in which it is determined whether all the road segment records in the database have been examined (Steps 782 and 786) and if there are more segment records to examine, the process 770 proceeds to get the next segment record (Step 772).

Referring back to Step 782, if examination of the location of the segment's altitude information and shape points indicates that there is a curve along a downhill portion, the process 770 adds precautionary action data 160 to the database 110 (Step 784). The precautionary action data 160 indicates the presence of a feature in the road network where a precautionary action may be taken. After the precautionary action data 160 is added to the database 110, the process 770 proceeds to the step in which it is determined whether all the road segment records in the database have been examined (Step 786) and if there are more segment records to examine, the process 770 proceeds to get the next segment record (Step 772).

The process 770 ends when it is determined that all the road segment records have been examined (Step 786).

It is noted that the process 770, above, performs a data mining function. The existence of the potentially difficult location, i.e., a curve on a downhill section of road, is derived from data already collected and present in the database. It is noted that the process 770, above, evaluates multiple data items in the original database, to determine whether the condition exists, in this case, a curve on a downhill section of road. By evaluating these multiple data items, a determination is made whether these multiple data items describe the condition of interest. If these data items do describe the condition, a new data item, i.e., the precautionary action data, is added to the database.

The precautionary action data 160 added to the database 110 by the process 770 may have the structure or format shown in Figure 2. The precautionary action data 160 is associated with the road segment identified as having a curve on a downhill section of road. In this embodiment, the precautionary action data 160 may include components that indicate a condition type, a precautionary action location, where a vehicle control action should be taken, data that indicates the direction along the represented road segment where the precautionary action should be taken and a reference that indicates the location of the curve on a downhill section of road.

The precautionary action data 160 that indicates a location of the curve on a downhill section of road is used in a vehicle system as described in connection with Figures 3 and 4.

### E. TRAFFIC SIGNALS OR SIGNS AT BOTTOMS OF HILLS

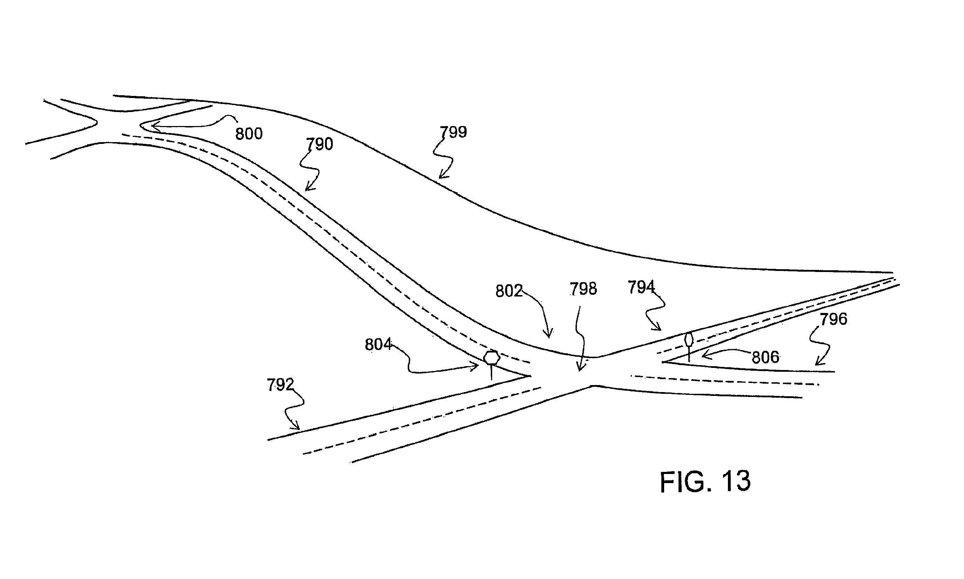

Figure 13 depicts road segments 790, 792, 794 and 796. These road segments meet at an intersection 798. The road segment 790 is located on a hill 799, such that the altitude of one end 800 of the road segment 790 is greater than the altitude at the other end 802, which in this case is the end at the intersection 798. Located at the intersection 798 are stop signs 804 and 806.

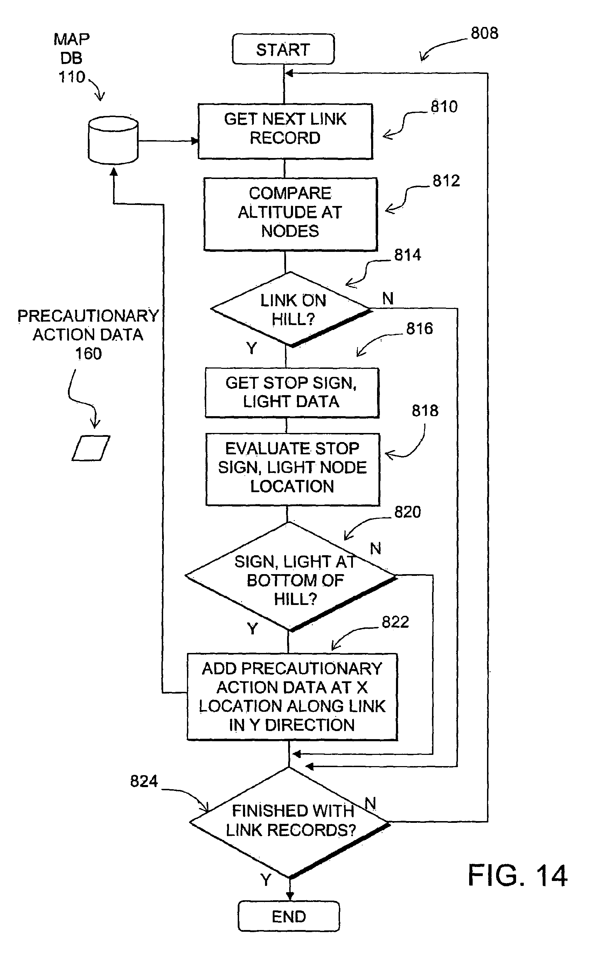

Figure 14 is a flowchart of a process 808. The process 808 is a specific implementation of the process 100 in Figure 1. The process 808 examines each data record that represents a road segment to determine whether it represents one similar to the road segment 790 in Figure 13. (The process 808 may use a procedure that examines in turn each data record that represents each road segment represented in the entire database.) In one step, a data record that represents a link or road segment is read from the database 110 (Step 810). This road segment record includes data attributes that indicate the altitude at each end (i.e., the nodes) of the represented road segment. The altitudes at the ends of the represented road segment are compared (Step 812). From the comparison of altitude information, it can be determined whether the represented road segment is part of a hill. If the represented road segment is not part of a hill, the process 808 proceeds to a step in which it is determined whether all the road segment records in the database have been examined (Steps 814 and 824). If there are more segment records to examine, the process 808 proceeds to get the next segment record (Step 810) and continues.

Referring back to Step 814, if the represented road segment is part of a hill, the process 808 proceeds to obtain the data that represent traffic signals, stop signs or yield signs along the segment (Step 816). The data that represent traffic lights, stop signs or yield signs is examined (Step 818). From an examination of segment's altitude change, as well as the data that represent traffic lights, stop signs and yield signs, it is determined whether there exists a traffic light, stop sign or yield sign at the bottom of a hill (similar to the stop sign 804 shown in Figure 13). If examination of the segment's altitude change and the data that represent traffic lights, stop signs and yield signs indicates that there is no traffic light, stop sign or yield sign at the bottom of a hill, the process 808 proceeds to the step in which it is determined whether all the road segment records in the database have been examined (Steps 820 and 824) and if there are more segment records to examine, the process 808 proceeds to get the next segment record (Step 814).

Referring back to Step 820, if examination of the segment's altitude change and the data that represent traffic lights, stop signs and yield signs indicates that there is a traffic light, stop sign or yield sign at the bottom of a hill, the process 808 adds precautionary action data 160 to the database 110 (Step 822). The precautionary action data 160 indicates the presence of a feature in the road network where a precautionary action may be taken. After the precautionary action data 160 is added to the database 110, the process 808 proceeds to the step in which it is determined whether all the road segment records in the database have been examined (Step 824) and if there are more segment records to examine, the process 808 proceeds to get the next segment record (Step 810).

The process 808 ends when it is determined that all the road segment records have been examined (Step 824).

The process 808, above, performs a data mining function to identify the existence of a potentially difficult location, i.e., the presence of a traffic light, stop sign or yield sign located at the bottom of a hill, from data already collected and present in the database. The process 808 evaluates multiple data items in the original database, to determine whether the condition exists, in this case, a traffic light, stop sign or yield sign located at the bottom of a hill. By evaluating these multiple data items, a determination is made whether these multiple data items describe the condition of interest. If these data items do describe the condition, a new data item, i.e., the precautionary action data, is added to the database.

It is further noted that the process 808 may use a threshold when evaluating various items of data to determine whether the potentially hazardous condition exists.
For example, the relative amount of elevation change along a road segment may be compared to a threshold (e.g., 3%) to determine whether a traffic light, stop sign or yield sign located one end of the road segment is at the bottom of a hill.

The precautionary action data 160 added to the database 110 by the process 808 may have the structure or format shown in Figure 2. The precautionary action data 160 is associated with the road segment identified as having a traffic light, stop sign or yield sign located at the bottom of a hill. In this embodiment, the precautionary action data 160 may include components that indicate a condition type, a precautionary action location, where a vehicle control action should be taken, data that indicates the direction along the represented road segment where the precautionary action should be taken and a reference that indicates the location of the traffic light, stop sign or yield sign located at the bottom of a hill.

The precautionary action data 160 that indicates a location of the traffic light, stop sign or yield sign located at the bottom of a hill is used in a vehicle system as described in connection with Figures 3 and 4.

### F. TRAFFIC SIGNALS OR SIGNS ALONG ROAD CURVES

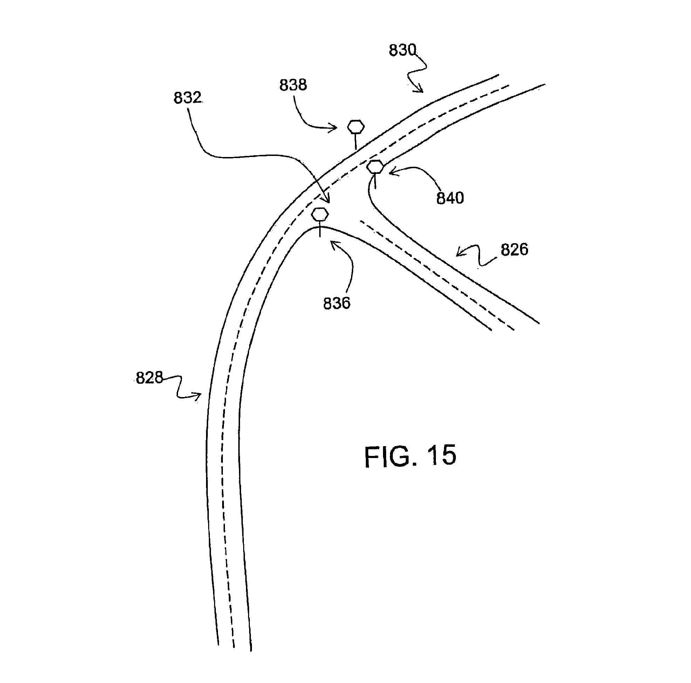

Figure 15 depicts road segments 826, 828 and 830. These road segments meet at an intersection 832. The road segments 828 and 830 are curved where they meet at the intersection 832. Located at the intersection 832 are stop signs 836, 838 and 840.

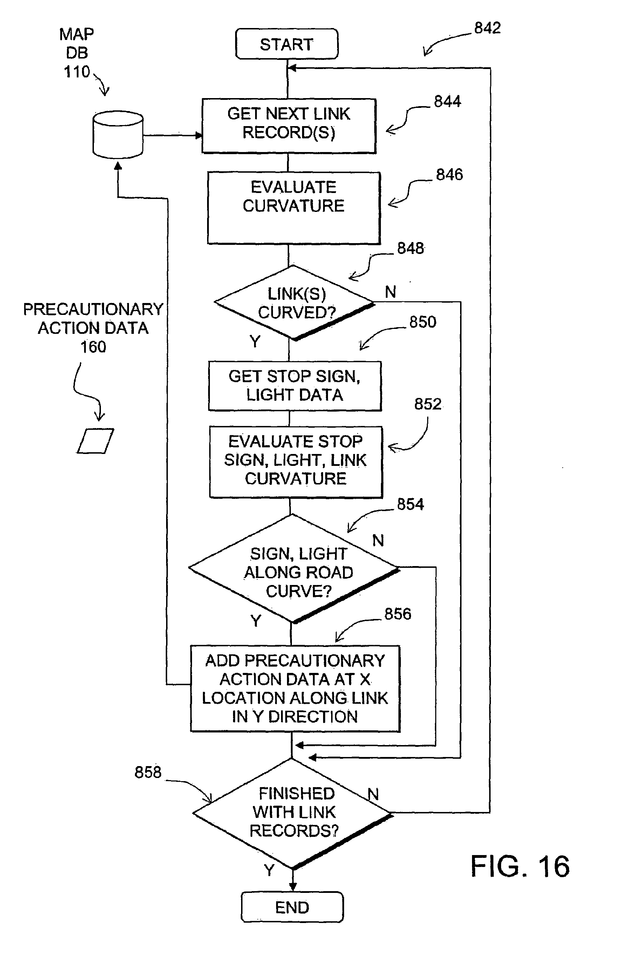

Figure 16 is a flowchart of a process 842. The process 842 is a specific implementation of the process 100 in Figure 1. The process 842 examines each data record that represents a road segment (also referred to herein as a "link") to determine whether it represents one similar to the road segment 828 or 830 in Figure 15. (The process 842 may use a procedure that examines in turn each data record that represents each road segment represented in the entire database.) In one step, a data record that represents a link or road segment is read from the database 110 (Step 844). This road segment record may include data (e.g., shape points) that indicate whether the road segment is curved. This data is evaluated (Step 846). If the represented road segment is not curved, the process 842 proceeds to a step in which it is determined whether all the road segment records in the database have been examined (Steps 848 and 858). If there are more segment records to examine, the process 842 proceeds to get the next segment record (Step 844) and continues.

Referring back to Step 848, if the represented road segment is curved, the process 842 proceeds to obtain the data that represent stop signs and traffic lights along the segment (Step 850). The data that represent stop signs and traffic lights is examined (Step 852). From an examination of segment's curvature, as well as the data that represent stop signs and traffic lights, it is determined whether there exists a stop sign or traffic light along a curved portion of the road segment (or combination of road segments, such as road segments 828 and 830 shown in Figure 15). If examination of the segment's curvature and the data that represent stop signs and traffic lights indicates that there is no stop sign or and traffic light along a curved section of road, the process 842 proceeds to the step in which it is determined whether all the road segment records in the database have been examined (Steps 854 and 858) and if there are more segment records to examine, the process 842 proceeds to get the next segment record (Step 844).

Referring back to Step 854, if examination of the segment's curvature and the data that represent stop signs and traffic lights indicates that there is a stop sign or traffic light along a curved section of road, the process 842 adds precautionary action data 160 to the database 110 (Step 856). The precautionary action data 160 indicates the presence of a feature in the road network where a precautionary action may be taken. After the precautionary action data 160 is added to the database 110, the process 842 proceeds to the step in which it is determined whether all the road segment records in the database have been examined (Step 858) and if there are more segment records to examine, the process 842 proceeds to get the next segment record (Step 844).

The process 842 ends when it is determined that all the road segment records have been examined (Step 858).

It is noted that the process 842, above, performs a data mining function to identify existence of the potentially difficult location, i.e., the presence of a stop sign or traffic light located along a curved section of road, from data already collected and present in the database. It is noted that the process 842, above, evaluates multiple data items in the original database, to determine whether the condition exists, in this case, a stop sign or traffic light located along a curved section of road. By evaluating these multiple data items, a determination is made whether these multiple data items describe the condition of interest. If these data items do describe the condition, a new data item, i.e., the precautionary action data, is added to the database.

It is further noted that the process 842 may use a threshold when evaluating various items of data to determine whether the potentially hazardous condition exists.
For example, the relative amount of curvature along a road segment may be compared to a threshold to determine whether the road is sufficiently curved such that a traffic light or stop sign located along the road might be considered to be potentially hazardous.

The precautionary action data 160 added to the database 110 by the process 842 may have the structure or format shown in Figure 2. The precautionary action data 160 is associated with the road segment identified as having a stop sign or traffic light located along a curved section of road. In this embodiment, the precautionary action data 160 may include components that indicate a condition type, a precautionary action location, where a vehicle control action should be taken, data that indicates the direction along the represented road segment where the precautionary action should be taken and a reference that indicates the location of the stop sign or traffic light located along a curved section of road.

The precautionary action data 160 that indicates a stop sign or traffic light located along a curved section of road is used in a vehicle system as described in connection with Figures 3 and 4.

### G. BLIND INTERSECTIONS ALONG ROADS

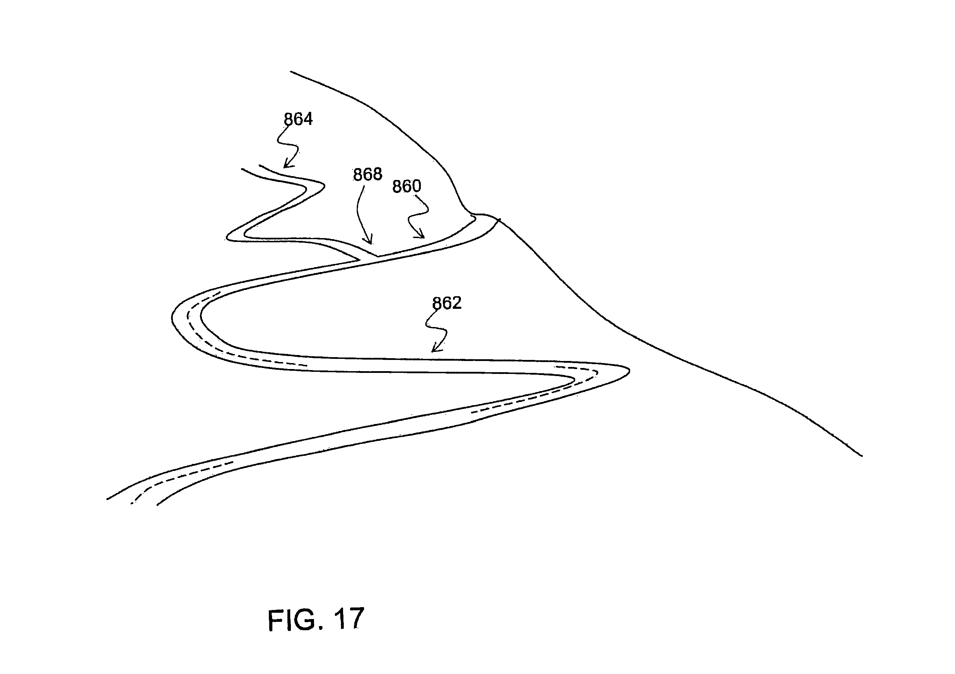

Figure 17 depicts road segments 860, 862 and 864. These road segments meet at an intersection 868. The road segment 862 is curved and located along a hill where it meets the intersection 868. Because of the slope of the hill or the curvature of the road or both, a vehicle driver traveling along the road segment 862 in the direction toward the intersection 868 may not have a good view of the intersection 868 or any vehicles approaching the intersection from the road segment 864. Because a driver's view of the intersection is blocked for some distance while traveling up to the intersection, the intersection is considered a "blind" intersection. Because of the blocked view, the intersection is potentially hazardous.

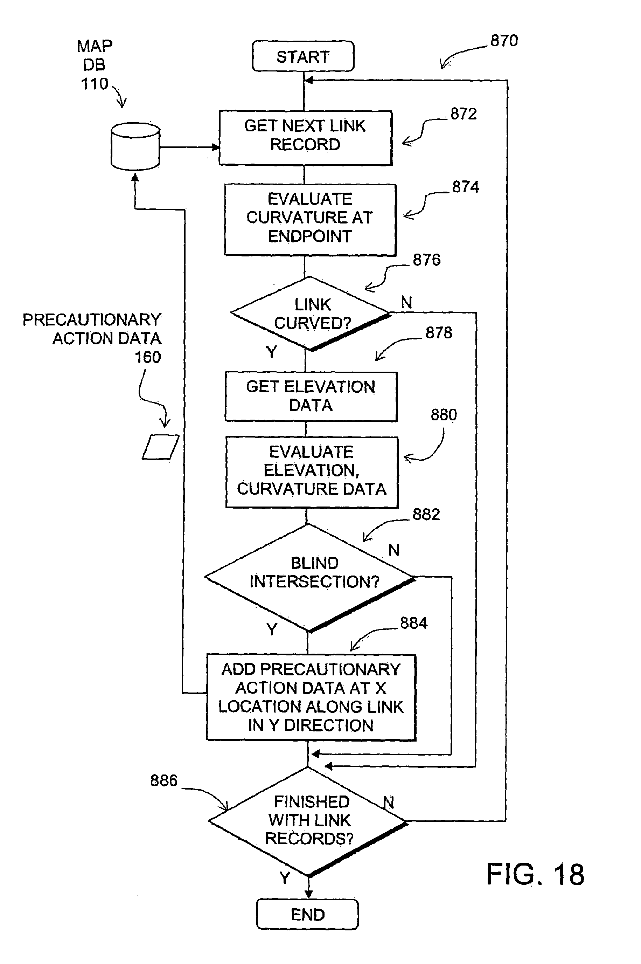

Figure 18 is a flowchart of a process 870. The process 870 is a specific implementation of the process 100 in Figure 1. The process 870 examines each data record that represents a road segment to determine whether it represents one similar to the road segment 862 or 864 in Figure 17. (The process 870 may use a procedure that examines in turn each data record that represents each road segment represented in the entire database.) In one step, a data record that represents a link or road segment is read from the database 110 (Step 872). This road segment record may include data (e.g., shape points) that indicate whether the road segment is curved leading into an intersection (i.e., an endpoint of the road segment). This data is evaluated (Step 874). If the represented road segment is not curved leading into an intersection, the process 870 proceeds to a step in which it is determined whether all the road segment records in the database have been examined (Steps 876 and 886). If there are more segment records to examine, the process 870 proceeds to get the next segment record (Step 872) and continues.

Referring back to Step 876, if the represented road segment is curved, the process 870 proceeds to obtain the data that represent the segment's elevation (Step 878). The data that represent the segment's elevation is examined (Step 880). From an examination of segment's curvature leading into an intersection, as well as the data that represent the segment's elevation, it is determined whether there exists a blind intersection along the road segment (or combination of road segments, such as road segments 862 and 864 shown in Figure 17). If examination of the segment's curvature and elevation indicates that there is no blind intersection, the process 870 proceeds to the step in which it is determined whether all the road segment records in the database have been examined (Steps 882 and 886) and if there are more segment records to examine, the process 870 proceeds to get the next segment record (Step 872).

Referring back to Step 882, if examination of the segment's curvature and elevation indicates that there is a blind intersection along the road, the process 870 adds precautionary action data 160 to the database 110 (Step 884). The precautionary action data 160 indicates the presence of a feature in the road network where a precautionary action may be taken. After the precautionary action data 160 is added to the database 110, the process 870 proceeds to the step in which it is determined whether all the road segment records in the database have been examined (Step 886) and if there are more segment records to examine, the process 870 proceeds to get the next segment record (Step 872).

The process 870 ends when it is determined that all the road segment records have been examined (Step 886).

It is noted that the process 870, above, performs a data mining function to identify the existence of the potentially difficult location, i.e., the presence of a blind intersection along a road, from data already collected and present in the database. The process 870, above, evaluates multiple data items in the original database, to determine whether the condition exists, in this case, a blind intersection along a road. The blind intersection may be caused by a hill, a curve, a building, landscape, or other geographic feature represented by data in the database that obstructs a driver's view of an intersection. By evaluating these multiple data items, a determination is made whether these multiple data items describe the condition of interest. If these data items do describe the condition, a new data item, i.e., the precautionary action data, is added to the database.

It is further noted that the process 870 may use one or more thresholds when evaluating various items of data to determine whether the potentially hazardous condition exists. For example, the amount of curvature along a road segment or the height of a feature may be compared to a threshold to determine whether a driver's view might be sufficiently obstructed such that a blind intersection is considered to exist.

The precautionary action data 160 added to the database 110 by the process 870 may have the structure or format shown in Figure 2. The precautionary action data 160 is associated with the road segment identified as having a blind intersection.

In this embodiment, the precautionary action data 160 may include components that indicate a condition type, a precautionary action location, where a vehicle control action should be taken, data that indicates the direction along the represented road segment where the precautionary action should be taken and a reference that indicates the location of the intersection at the blind intersection.

The precautionary action data 160 that indicates a blind intersection is used in a vehicle system as described in connection with Figures 3 and 4.

### H. SPEED CHANGES ON UPCOMING CURVES ALONG ROADS

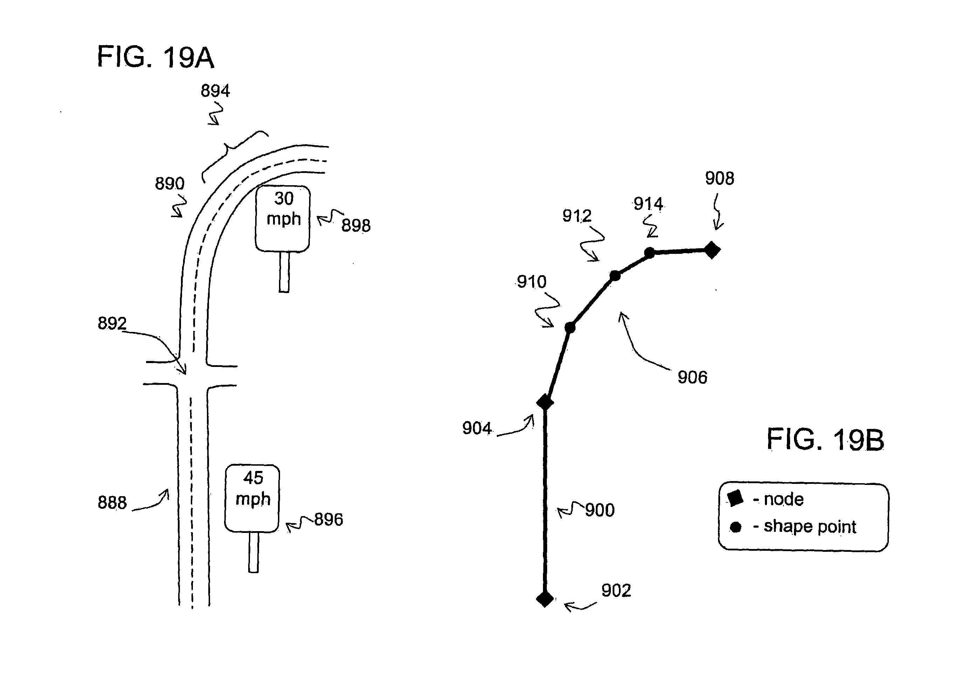

Figure 19A depicts road segments 888 and 890. These road segments meet at an intersection 892. The road segment 888 is straight but the road segment 890 is curved in a portion 894. The speed limit along the straight road segment 888 is 45 mph as indicated by the sign 896 and the speed limit along the curved road segment 890 is 30 mph as indicated by the sign 898.

Figure 19B is an illustration of how the road segments in Figure 19A are represented by data contained in a map database (such as the database 110 in Figure 2). The road segments are each represented by a data record that defines a line that extends between two endpoints, or nodes. The location of the road segment is defined by the data indicating the locations (e.g., geographic coordinates, including altitude) of the nodes.
As shown in Figure 19B, the road segment 888 is represented by the line 900 that extends between endpoints 902 and 904. The road segment 890 is represented by the line 906 that extends between endpoints 904 and 908.

The data record that represents each road segment includes data that indicates the shape of the road segment, e.g., using shape points. In the case of a straight road segment, such as road segment 900 in Figure 19B, no shape points are required. However, in the case of a curved road segment, such as the road segment 906 in Figure 19B, one or more shape points are used to define locations along the road segment. Figure 19B shows several shape points, 910, 912 and 914, defined along the road segment 906 between the endpoints, i.e., nodes 904 and 908. Thus, the curved road segment 890 in Figure 19A is represented by an approximation 906 comprised of a series of short, straight lines as shown in Figure 19B. (Alternatively, a database may represent a curved road segment by a curved line, such as a spline, clothoid, etc. In this alternative, data that defines the curved line is included in the database.)

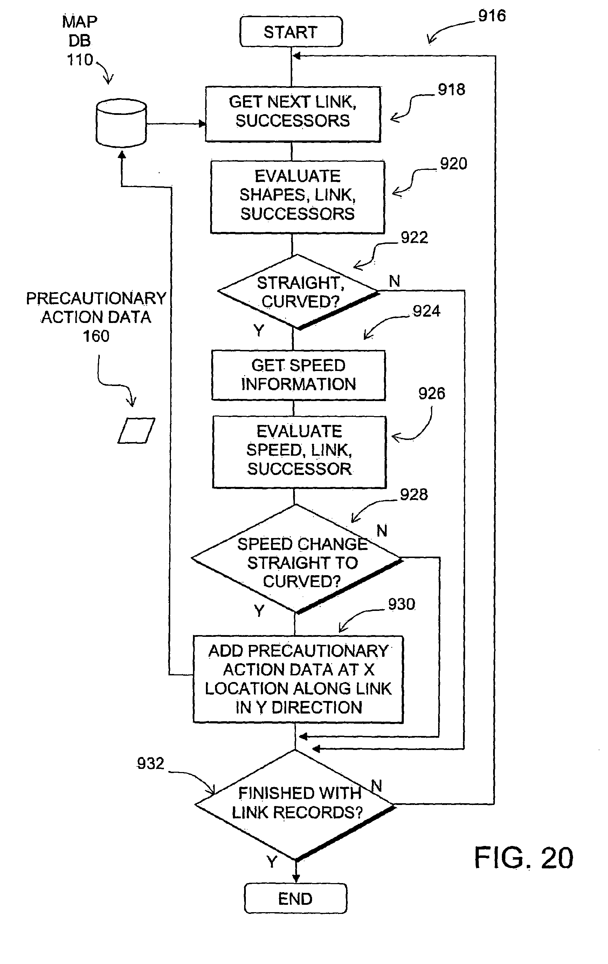

Figure 20 is a flowchart of a process 916. The process 916 is a specific implementation of the process 100 in Figure 1. The process 916 examines each data record that represents a road segment to determine whether it represents one similar to the road segment 888 or 890 in Figure 19A. (The process 916 may use a procedure that examines in turn each data record that represents each road segment represented in the entire database.) In one step, a data record that represents a link or road segment is read from the database 110 (Step 918). This step of the process 916 also obtains the successor links, i.e., the data records that represent the road segments that connect to the end points of the initial road segment. These road segment records may include data (e.g., shape points) that indicate whether the represented road segment is curved. This data is evaluated to determine whether a straight road segment leads to a road segment that is curved (Step 920). (Note that this step may need to be preformed for each successor segment of the initial road segment.) If the initial road segment is not a straight road leading into a curved road, the process 916 proceeds to a step in which it is determined whether all the road segment records in the database have been examined (Steps 922 and 932). If there are more segment records to examine, the process 916 proceeds to get the next segment record (Step 918) and continues.

Referring back to Step 922, if the represented road segment is a straight road segment that leads into a curved road segment, the process 916 proceeds to obtain the data that represent the speed limit along each road segment (Step 924). The data that represent the segments' speed limits are examined (Step 926). From evaluating whether a straight road segment leads to a curved road segment and the speed limits along the respective road segments, it is determined whether there exists a speed limit change between a straight road section and a curved road section greater than some defined threshold value, such as shown along road sections 888 and 890 shown in Figure 19A).
If examination of the segment's curvature and speed indicates that there is no speed limit change between a straight road section and a curved road section, the process 916 proceeds to the step in which it is determined whether all the road segment records in the database have been examined (Steps 928 and 932) and if there are more segment records to examine, the process 916 proceeds to get the next segment record (Step 918).

In another alternative, the process 916 does not use coded and stored speed limits in the database but instead calculates the maximum safe recommended speed for the curve. This calculation may be based on one or a combination of values including radius of curvature of the curve, the minimum radius of curvature occurring in the curve, amount of heading/direction change of the curve, and/or length of the curve. The calculation will also be based on the maximum recommended centrifugal acceleration of the vehicle when negotiating the curve, such as 0.3 times the acceleration of gravity or 0.5 times the acceleration of gravity. For any algorithm using these parameters of the curve and vehicle characteristics, a threshold of settings that identify a dangerous curve is determined and used to evaluate each curve in the database.

Referring back to Step 928, if examination of the segments' shape curvature and speed limits indicates that there is a speed limit change between a straight road section and a curved road section greater than some defined threshold value, the process 916 adds precautionary action data 160 to the database 110 (Step 930). The precautionary action data 160 indicates the presence of a feature in the road network where a precautionary action may be taken. After the precautionary action data 160 is added to the database 110, the process 916 proceeds to the step in which it is determined whether all the road segment records in the database have been examined (Step 932) and if there are more segment records to examine, the process 916 proceeds to get the next segment record (Step 918).

The process 916 ends when it is determined that all the road segment records have been examined (Step 932).

It is noted that the process 916, above, performs a data mining function to identify the existence of the potentially difficult location, i.e., the presence of a speed limit change between a straight road section and a curved road section, from data already collected and present in the database. It is noted that the process 916, above, evaluates multiple data items in the original database, to determine whether the condition exists, in this case, a speed limit change between a straight road section and a curved road section. By evaluating these multiple data items, a determination is made whether these multiple data items describe the condition of interest. If these data items do describe the condition, a new data item, i.e., the precautionary action data, is added to the database.

The precautionary action data 160 added to the database 110 by the process 916 may have the structure or format shown in Figure 2. The precautionary action data 160 is associated with the road segment identified as having a speed limit change between a straight road section and a curved road section. In this embodiment, the precautionary action data 160 may include components that indicate a condition type, a precautionary action location, where a vehicle control action should be taken, data that indicates the direction along the represented road segment where the precautionary action should be taken and a reference that indicates the location of the speed limit change between a straight road section and a curved road section.

The precautionary action data 160 that indicates a location of a speed limit change between a straight road section and a curved road section is used in a vehicle system as described in connection with Figures 3 and 4.

### I. UNUSUALLY NARROW LANES OR ROADS

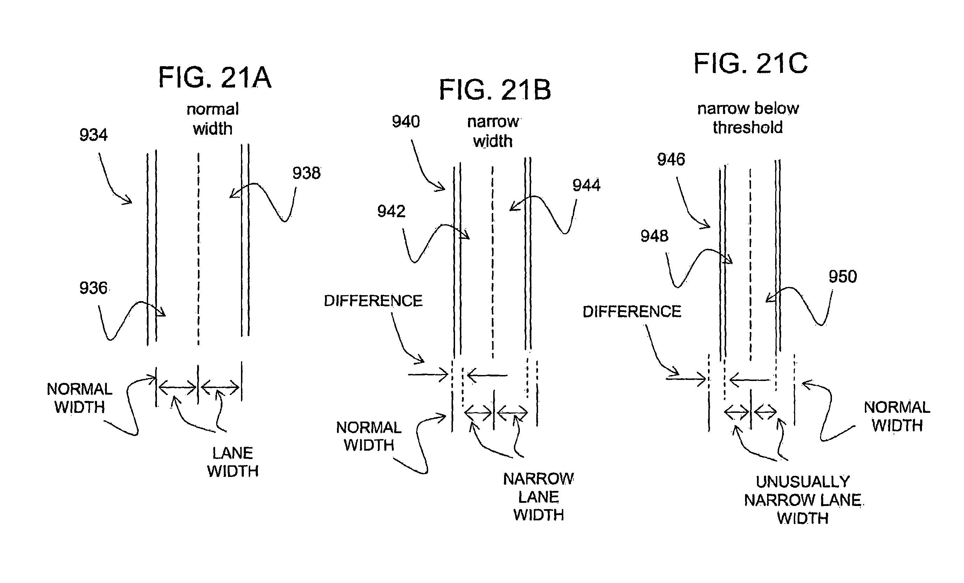

Figure 21A depicts a road segment 934. The road segment consists of a lane 936 and a lane 938. These lanes 936 and 938 are normal width for a road. For example, in the United States, a normal road width may be 12 feet.

Figure 21B depicts a road segment 940 that consists of lanes 942 and 944. These lanes are narrower than the normal width lanes shown in Figure 21A. These narrow lanes 942 and 944 may be 10 feet each, for example.

Figure 21C depicts a road segment 946 that consists of lanes 948 and 950. These lanes are unusually narrow lanes. These lanes may be found where the geography limits the amount of room for a road, such as on a bridge, along a hillside or mountain side, etc. The lanes 948 and 950 are less than 10 feet each. For example, these lanes 948 and 950 may be 9 feet each.

In a database that includes data that represents the geographic features in a region, a data record is included to represent each road segment, i.e., that portion of road between adjacent intersections. The data record that represents a road segment includes data that indicates the number of lanes in the road segment and the width of the road segment and/or the width of each lane. The width may be provided for all road segments or lanes or may be provided for only road segments or lanes that vary from the standard. Also, the width may vary along the length of a road segment. If this is the case, data may be included that indicates the road or lane width as well as the location along the road segment to which the width applies and/or changes.

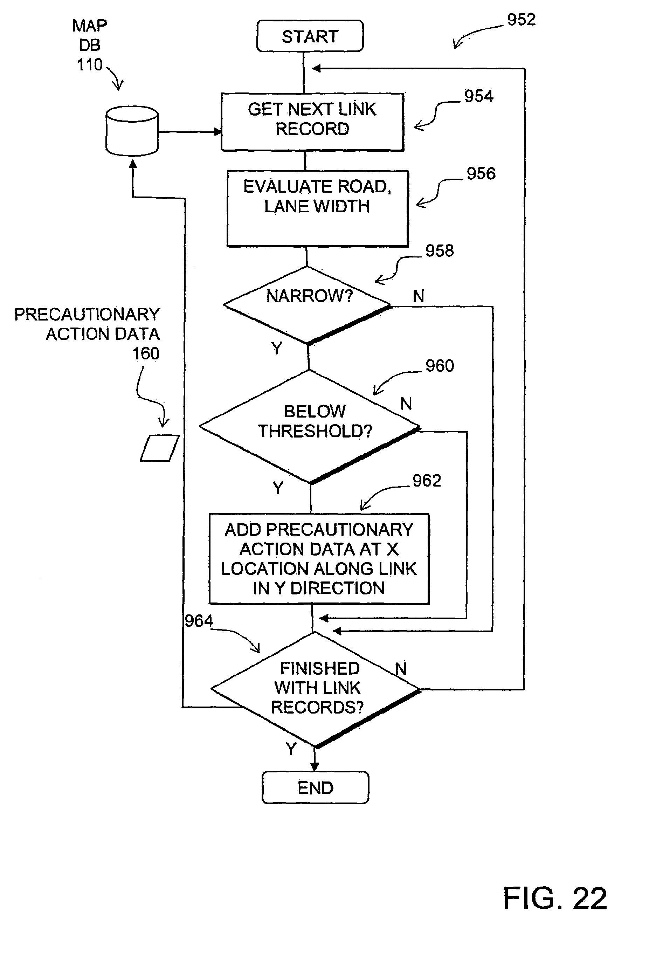

Figure 22 is a flowchart of a process 952. The process 952 is a specific implementation of the process 100 in Figure 1. The process 952 examines each data record that represents a road segment to determine whether it represents one similar to the road segment 946 in Figure 21C. (The process 952 may use a procedure that examines in turn each data record that represents each road segment represented in the entire database.) In one step, a data record that represents a link or road segment is read from the database 110 (Step 954). This road segment record may include data that indicates the road width or lane width. This data is evaluated (Step 956). If the represented road segment indicates the road or lane is not narrower than standard, the process 952 proceeds to a step in which it is determined whether all the road segment records in the database have been examined (Steps 958 and 964). If there are more segment records to examine, the process 952 proceeds to get the next segment record (Step 954) and continues.

Referring back to Step 958, if the represented road segment is narrower than a standard road or lane, the process 952 proceeds to evaluate the data that indicates the road or lane width along the road segment to determine whether the road or lane is unusually narrow. More specifically, the process evaluates the road or lane width to determine if the road or lane is less than a threshold, e.g., 10 feet for a lane width. From an evaluation of the road or lane width relative to a predetermined threshold, it is determined whether there exists an unusually narrow road or lane (such as the lanes 948 and 950 in Figure 21C). If examination of the segment's road or lane width indicates that the road or lane is not below the threshold, the process 952 proceeds to the step in which it is determined whether all the road segment records in the database have been examined (Steps 960 and 964) and if there are more segment records to examine, the process 952 proceeds to get the next segment record (Step 954).

Referring back to Step 960, if examination of the segment's road or lane width indicates that the road or lane is below the threshold, the process 952 adds precautionary action data 160 to the database 110 (Step 962). The precautionary action data 160 indicates the presence of a feature in the road network where a precautionary action may be taken.

After the precautionary action data 160 is added to the database 110, the process 952 proceeds to the step in which it is determined whether all the road segment records in the database have been examined (Step 964) and if there are more segment records to examine, the process 952 proceeds to get the next segment record (Step 954).

The process 952 ends when it is determined that all the road segment records have been examined (Step 964).

It is noted that the process 952, above, performs a data mining function to identify the existence of a potentially difficult location, i.e., an unusually narrow road or lane along a road, from data already collected and present in the database. It is noted that the process 952, above, evaluates multiple data items in the original database, to determine whether the condition exists, in this case, a road or lane along a road that has a width below a threshold. By evaluating these multiple data items, a determination is made whether these data items describe the condition of interest. If these data items do describe the condition, a new data item, i.e., the precautionary action data, is added to the database.

The above process for determining whether an unusually narrow road or lane exists along a road can take into account other factors, such as speed limits, road surface, the presence and type of shoulders, and so on. According to this alternative, the threshold may take into account the speed limit along the road segment (which is also stored as data in the database 110.)

The precautionary action data 160 added to the database 110 by the process 952 may have the structure or format shown in Figure 2. The precautionary action data 160 is associated with the road segment identified as having an unusually narrow road or lane. In this embodiment, the precautionary action data 160 may include components that indicate a condition type, a precautionary action location, where a vehicle control action should be taken, data that indicates the direction along the represented road segment where the precautionary action should be taken and a reference that indicates the location of the unusually narrow road or lane along a road.

The precautionary action data 160 that indicates a location of the unusually narrow road or lane is used in a vehicle system as described in connection with Figures 3 and 4.

### J. INTERSECTIONS LOCATED OVER HILLS

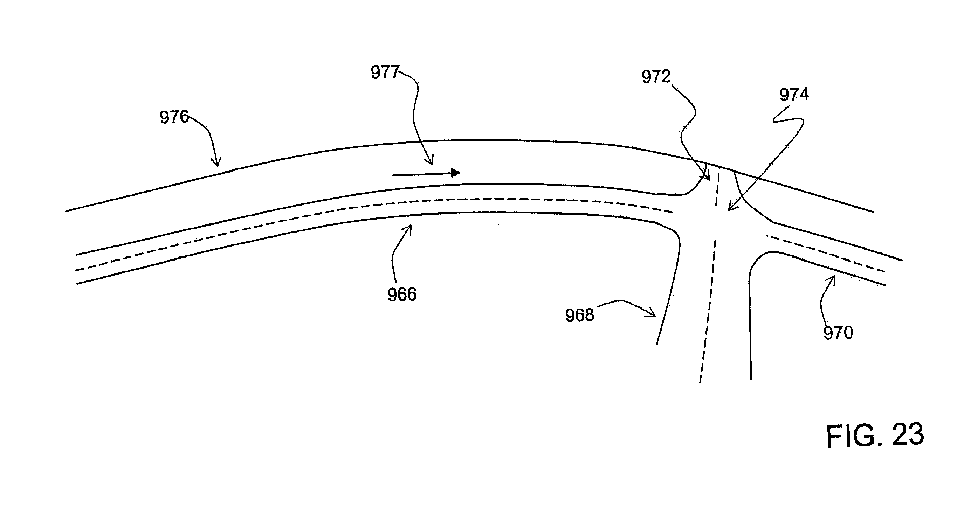

Figure 23 depicts road segments 966, 968, 970 and 972. These road segments meet at an intersection 974. The road segment 966 extends over a top of the hill 976 so that the intersection 974 is located beyond the top of the hill 976 when a driver travels along the road segment 966 in the direction indicated by the arrow 977. Because of the shape of the hill, a vehicle driver traveling along the road segment 966 in the direction toward the intersection 974 may not have a good view of the intersection 974 or any vehicles approaching the intersection from the road segments 968, 970 and 972. Because of this, the intersection 974 is potentially hazardous.

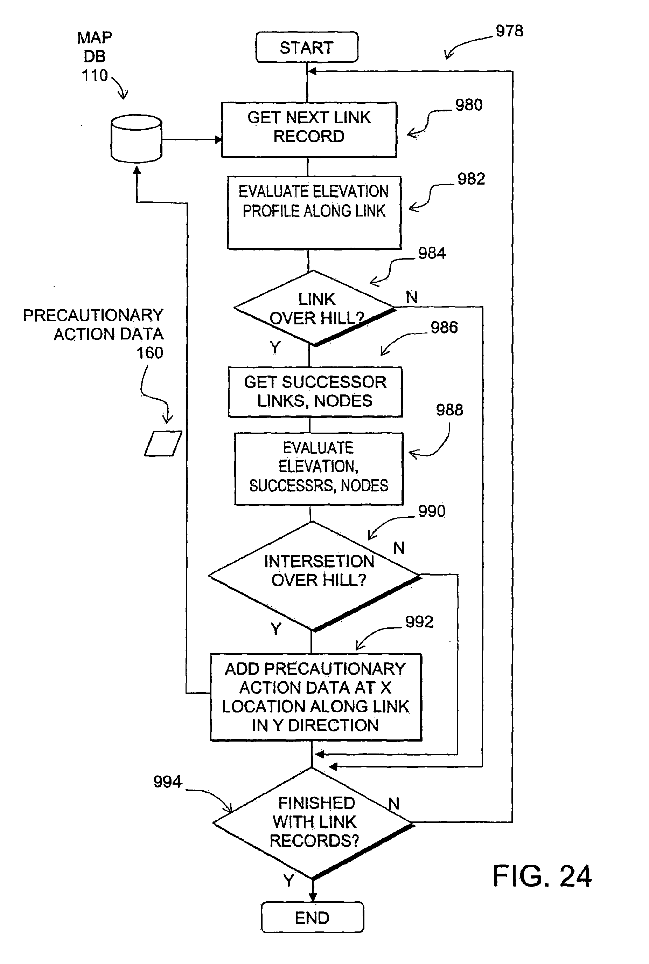

Figure 24 is a flowchart of a process 978. The process 978 is a specific implementation of the process 100 in Figure 1. The process 978 examines each data record that represents a road segment to determine whether it represents one similar to the road segment 966 in Figure 23. (The process 978 may use a procedure that examines in turn each data record that represents each road segment represented in the entire database.) In one step, a data record that represents a link or road segment is read from the database 110 (Step 980). This road segment record may include data that indicates the elevation at various points along the road (e.g., at shape points). This data is evaluated (Step 982). If the represented road segment does not have a hill top, the process 978 proceeds to a step in which it is determined whether all the road segment records in the database have been examined (Steps 984 and 994). If there are more segment records to examine, the process 978 proceeds to get the next segment record (Step 980) and continues.

Referring back to Step 984, if the represented road segment includes a hilltop, the process 978 proceeds to obtain the data that represent the nodes (intersections) at the segment's endpoints (Step 986). The segment's successors (i.e., the road segments that connect to the segment's endpoints) may also be accessed. The data that represent the intersections at the segment's endpoints is examined (Step 988). From an examination of segment's elevation profile, as well as the data that represent the segment's endpoints, it is determined whether there exists an intersection located over a hilltop (as shown in Figure 23). (The definition of "over a hilltop" may be that the hilltop is of sufficient height that the intersection is not visible from the typical height of a driver in a vehicle approaching the hilltop. In addition, a factor of distance from the hilltop may be included in this definition. Alternatively, other criteria may be established to define when an intersection is "over a hilltop.") If examination of the segment's elevation profile and endpoints indicates that there is no intersection over a hilltop, the process 978 proceeds to the step in which it is determined whether all the road segment records in the database have been examined (Steps 990 and 994) and if there are more segment records to examine, the process 978 proceeds to get the next segment record (Step 980).

Referring back to Step 990, if examination of the segment's elevation profile and endpoints indicates that there is an intersection located over a hilltop, the process 978 adds precautionary action data 160 to the database 110 (Step 992). The precautionary action data 160 indicates the presence of a feature in the road network where a precautionary action may be taken. After the precautionary action data 160 is added to the database 110, the process 978 proceeds to the step in which it is determined whether all the road segment records in the database have been examined (Step 994) and if there are more segment records to examine, the process 978 proceeds to get the next segment record (Step 980).

The process 978 ends when it is determined that all the road segment records have been examined (Step 994).

The process 978, above, performs a data mining function to identify the existence of a potentially difficult location, i.e., the presence of an intersection located over a hilltop, from data already collected and present in the database. It is noted that the process 978, above, evaluates multiple data items in the original database, to determine whether the condition exists, in this case, an intersection located over a hilltop. By evaluating these multiple data items, a determination is made whether these multiple data items describe the condition of interest. If these data items do describe the condition, a new data item, i.e., the precautionary action data, is added to the database.

It is further noted that the process 978 may use a threshold when evaluating various items of data to determine whether the potentially hazardous condition exists.
For example, the elevation change along a road segment may be compared to a threshold to determine whether a sufficiently high hilltop exists.

The precautionary action data 160 added to the database 110 by the process 978 may have the structure or format shown in Figure 2. The precautionary action data 160 is associated with the road segment identified as having an intersection located over a hilltop. In this embodiment, the precautionary action data 160 may include components that indicate a condition type, a precautionary action location, where a vehicle control action should be taken, data that indicates the direction along the represented road segment where the precautionary action should be taken and a reference that indicates the location of the intersection located over a hilltop.

The precautionary action data 160 that indicates a location of the intersection located over a hilltop is used in a vehicle system as described in connection with Figures 3 and 4.

### K. INSUFFICIENT MERGE LANES ALONG ROADS

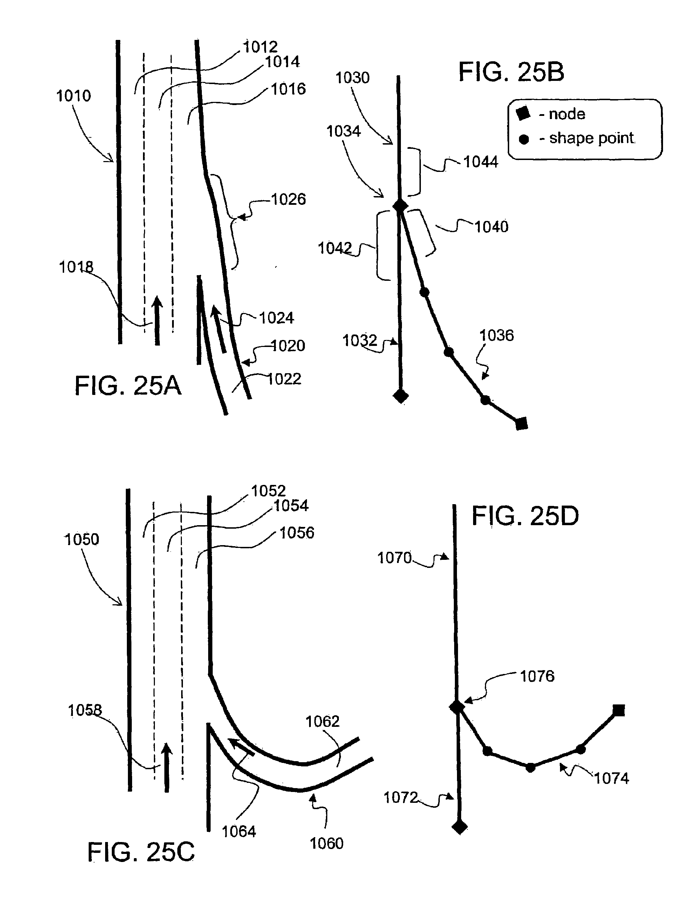

Figure 25A depicts a portion of an actual road network. The road network includes a road segment 1010. The road segment 1010 includes three lanes 1012, 1014 and 1016 for carrying vehicle traffic in the direction of travel indicated by the arrow 1018. An entrance ramp 1020 consisting of a single lane 1022 connects to the road segment 1010. The entrance ramp 1020 carries traffic in the direction indicated by the arrow 1024. As shown in Figure 25A, the entrance ramp 1020 gradually merges into the road 1010. The gradual merger occurs over a distance 1026. Along the distance 1026, the width of the entrance ramp 1020 gradually decreases as it merges into the lane 1016 of road 1010.

Figure 25B is an illustration of how the roads in Figure 25A are represented by data contained in a map database (such as the database 110 in Figure 2). Roads are represented as separate road segments, each of which is represented by a data record that defines a line that extends between two endpoints, or nodes. The location of the road segment is defined by the data indicating the locations, e.g., geographic coordinates, of the endpoints (or nodes) of the road segment. The endpoints of a road segment correspond to the locations of intersections, i.e., where one road segment connects to another road segment. In one type of database, the line that represents a road segment coincides with the centerline of the actual road segment. In a database representation of a road network, an entrance ramp, like the ramp 1020 shown in Figure 25A, forms an intersection with the road 1010 to which it joins. Therefore, as shown in Figure 25B, the road 1010 is represented by two road segments 1030 and 1032 that meet at an intersection formed with a road segment 1036 that represents the entrance ramp 1020. In Figure 25B, the intersection of road segments 1030, 1032 and 1036 is represented by the node 1034.

When actual roads, such as those shown in Figure 25A, are represented by their centerlines, as shown in Figure 25B, the intersection of the entrance ramp 1020 with the road 1010 is represented as a single point, i.e., the node 1034 in Figure 25B. By itself, this information does not convey the fact that ramp 1020 actually merges into the road 1010 over a distance 1026. In order to indicate that an intersection actually occurs gradually along a merge lane, such as shown in Figure 25A, additional data is included in the database. This additional data may be associated with the road segment record and may indicate what geographic feature, if any, is located adjacent to a road segment (or lane thereof). One way to provide this representation is described in U.S. Ser. No. 10/620,732, filed July 16, 2003, Pat Pub. No. 2005/0004753, the entire disclosure of which is incorporated by reference herein. In the case of an adjacent feature that extends along only a portion of a road segment, such as a merge lane of gradually decreasing width, the database may define one or more subsegments of a road segment. The subsegment data indicates start and end locations of the subsegment, relative to its associated road segment, and the feature adjacent to the subsegment. Using this model, a subsegment may be defined and associated with the segment 1036 indicating that a gradually decreasing merge lane is located adjacent to the segment along the portion 1040 thereof. Another subsegment is defined and associated with the segment 1032 indicating that a gradually decreasing merge lane is located adjacent to the segment along the portion 1042 thereof. Another subsegment is defined and associated with the segment 1030 indicating that a gradually decreasing merge lane is located adjacent to the segment along the portion 1044 thereof. (Note that there are other ways to indicate the presence of a merge lane and the present embodiments are not limited to any specific implementation.)

The database may be coded with assumed lengths of merge lanes, for example, 300 feet. In this case, the database may be coded as having no merge lane or one of insufficient length according to some defined standard, where applicable.

Figure 25C shows another portion of an actual road network. The road network includes a road 1050. The road 1050 includes three lanes 1052, 1054 and 1056 for carrying traffic in the direction of travel indicated by the arrow 1058. An entrance ramp 1060 consisting of a single lane 1062 connects to the road 1050. The entrance ramp 1060 carries traffic in the direction indicated by the arrow 1064. As shown in Figure 25C, the entrance ramp 1060 does not gradually merge into the road 1050. Unlike the entrance ramp 1020 in Figure 25A, the entrance ramp 1060 in Figure 25C merges abruptly to the road 1050, either without any gradual merge lane at all or with a merge lane of insignificant length.

Figure 25D illustrates how the portion of the road network in Figure 25C is represented by data contained in a map database (such as the database 110 in Figure 2). As explained above in connection with Figure 25B, roads are each represented by data records that define lines that extend between nodes. Therefore, the connection between the entrance ramp 1060 and the road 1050 forms an intersection so that in the data representation, as shown in Figure 25D, the line 1050 consists of two road segments 1070 and 1072 that connect to another road segment 1074 that represents the entrance ramp 1060. The road segments 1070, 1072 and 1074 connect to each other that the node 1076.

Because the actual entrance ramp 1060 (in Figure 25C) does not merge gradually into the road 1050, the data representation of these roads in Figure 25D does not include any data (such as subsegment data) that indicates the presence of a merge lane of gradually decreasing width. Thus, from the data representation in Figure 25D, it can be determined that the entrance ramp 1060 connects abruptly with the road 1050, i.e., without a merge lane.

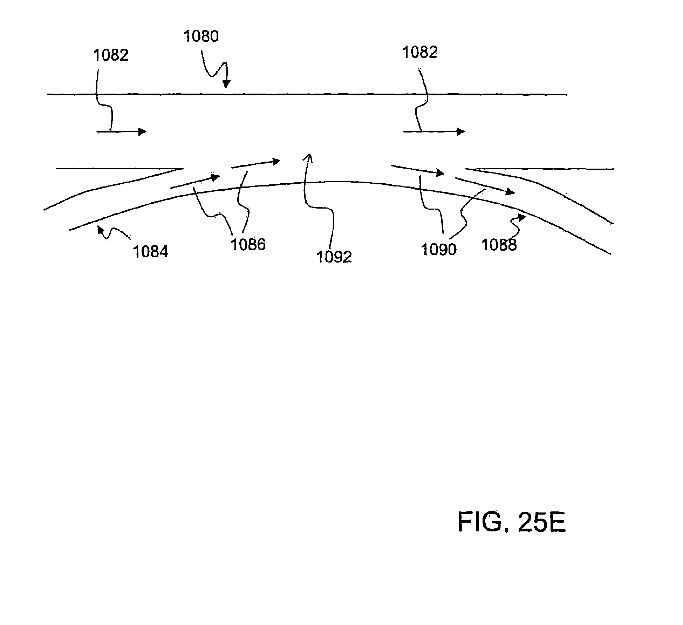

In another configuration, the merge lane may be coincident with an exit lane such as occurs at cloverleaf intersections. Such a configuration is shown in Figure 25E. In Figure 25E, a road 1080 carries traffic in the direction indicated by the arrow 1082. An entrance ramp 1084 carrying traffic in the direction indicated by the arrows 1086 connects to the road 1080. An exit ramp 1088 carrying traffic in the direction indicated by the arrows 1090 also connects to the road 1080. In the area indicated by 1092, a portion of the entrance ramp 1084 and the exit ramp 1088 cross and may actually coincide. Regardless of the effective length of the merge ramp for the entering traffic, the lane of this merge ramp might be considered potentially hazardous and of insufficient length if it is coincident with an exit lane as depicted in Figure 25E.

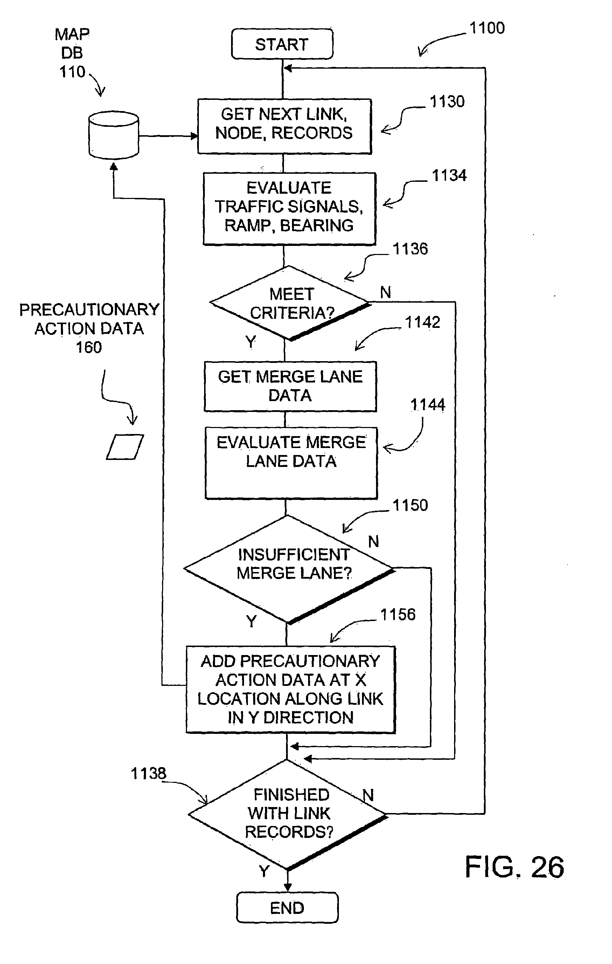

Figure 26 is a flowchart of a process 1100. The process 1100 is a specific implementation of the process 100 in Figure 1. The process 1100 examines data records that represents road segments to determine whether they represent a merge lane similar to those shown in Figure 25C or 25E. (The process 1100 may use a procedure that examines in turn each data record that represents each road segment represented in the entire database.) In one step, data records that represent road segments that meet to form an intersection are read from the database 110 (Step 1130). These road segment records may include data that indicate the number of road segments that meet, whether any of the road segments are entrance ramps or controlled access roads, restrictions on directions of travel, the angle (or bearing) of the road segments leading into or away from the intersection, and the presence or absence of a traffic signal (i.e., a traffic light or stop sign). This data is evaluated (Step 1134). If the represented intersection of roads does not meet the initial criteria, i.e., it includes a traffic signal, the process 1100 proceeds to a step in which it is determined whether all the road segment records in the database have been examined (Steps 1136 and 1138). If there are more segment records to examine, the process 1100 proceeds to get the next segment record (Step 1130) and continues.

Referring back to Step 1136, if the represented intersection of road segments describes a road configuration like the one depicted in Figure 25C or 25E, e.g., no traffic signal, the process 1100 proceeds to obtain the data that indicates the presence or absence of a merge lane (Step 1142). As mentioned above, this information may be indicated by what geographic feature is located adjacent to a road or lane, or a subsegment thereof. This merge lane data is evaluated (Step 1144). From an evaluation of the type of road intersection, as well as the merge lane data associated with the intersection, it is determined whether there exists an insufficient merge lane (similar to the roads shown in Figure 25C or 25E). If examination of the intersection and merge lane data information indicates that there is a sufficient merge lane at a road intersection without a traffic signal, the process 1100 proceeds to the step in which it is determined whether all the road segment records in the database have been examined (Steps 1150 and 1138) and if there are more segment records to examine, the process 1100 proceeds to get the next segment record (Step 1130).

Referring back to Step 1150, if examination of the intersection's traffic control signals and merge lane data indicate that there is an insufficient merge lane along a road that connects to another without a traffic signal, the process 1100 adds precautionary action data 160 to the database 110 (Step 1156). The precautionary action data 160 indicates the presence of a feature in the road network where a precautionary action may be taken.

In determining whether to add precautionary action data to the database 110, a threshold may be used. For example, a merge lane of 25 meters or less would be considered insufficient. The threshold value may take into account the speed limits along the respective road lanes, the angle at which the roads meet, and so on.

After the precautionary action data 160 is added to the database 110, the process 1100 proceeds to the step in which it is determined whether all the road segment records in the database have been examined (Step 1138) and if there are more segment records to examine, the process 1100 proceeds to get the next segment record (Step 1130).

The process 1100 ends when it is determined that all the intersections have been examined (Step 1138).

It is noted that the process 1100, above, performs a data mining function to identify the existence of a potentially difficult location, i.e., an intersection with an insufficient merge lane, from data already collected and present in the database. It is noted that the process 1100, above, evaluates multiple data items in the original database, to determine whether the condition exists, in this case, an insufficient merge lane. By evaluating these multiple data items, a determination is made whether these multiple data items describe the condition of interest. If these data items do describe the condition, a new data item, i.e., the precautionary action data, is added to the database.

The above process for determining whether an insufficient merge lane exists can take into account other factors, such as speed limits, road surface, the angle at which the roads meet, the functional classes of the roads, and so on.

The precautionary action data 160 added to the database 110 by the process 1100 may have the structure or format shown in Figure 2. The precautionary action data 160 is associated with the road segment identified as having an insufficient merge lane. In this embodiment, the precautionary action data 160 may include components that indicate a condition type, a precautionary action location, where a vehicle control action should be taken, data that indicates the direction along the represented road segment where the precautionary action should be taken and a reference that indicates the location of the insufficient merge lane.

The precautionary action data 160 that indicates a location of an insufficient merge lane is used in a vehicle system as described in connection with Figures 3 and 4.

### L. COMMUNITY REPORTED DRIVING HAZARDS ALONG ROADS

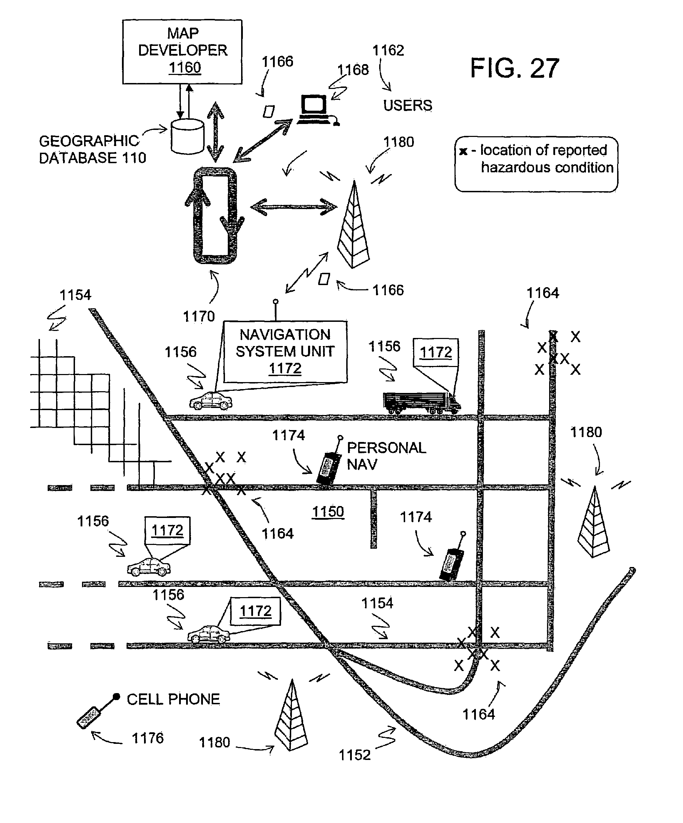

Figure 27 is a diagram illustrating a system for obtaining community input and/or user feedback about potentially hazardous driving locations throughout a road network in a region. Figure 27 shows a portion 1150 of a geographic region. The geographic region may correspond to an entire country, or several countries, a state, province, metropolitan or rural area, a state, a country, or combinations thereof.

Located in the geographic region 1150 is a road network. A portion 1152 of the road network is shown in Figure 27. The road network is comprised of various kinds of roads 1154 upon which vehicles 1156 of various kinds travel.

A map developer 1160, such as NAVTEQ Corporation or another entity, collects data that describes the road network. The map developer 1160 may be located in the geographic region or elsewhere. The map developer 1160 uses the collected data to create one or more databases 110 of information that represents the road network. The map developer 1160 distributes databases that represent the road network for use in vehicle navigation systems, Internet map and routing sites, handheld navigation systems, and advanced driver assistance systems, as well as other uses.

The map developer 1160 (or an entity operating on behalf of the map developer) collects information from users 1162 (also referred to as the "community") about hazardous or difficult locations 1164 for vehicle operation (or pedestrian travel) throughout the region. These locations 1164 (indicated by the mark "x" in Figure 27) may be locations along the road network known to users where accidents often occur, where accidents are often narrowly avoided, where there are visual obstructions, where the road geometry is unusual or difficult, or where any other condition exists that may affect vehicle operation or safety. The users located throughout the region may use various different platforms to send messages or reports 1166 about these hazardous or potentially hazardous locations to the map developer 1160. For example, users may use personal computers 1168 connected to a communication network 1170, such as the Internet, to send email messages to the map developer 1160 identifying hazardous driving locations. Alternatively, the map developer may have a web site at which users may submit reports of locations of potentially hazardous locations. The map developer may provide a graphical map that users can pan and zoom to identify the location. Alternatively, the map developer may provide other ways of identifying the locations, such as by textual descriptive or narrative, or even geographic coordinates. When accepting reports about hazardous locations, the map developer may also accept a description of the cause for the hazardous condition. The web site provided by the map developer 1160 to obtain user reports about potentially hazardous driving locations may be similar to the site for obtaining user input about map errors described in U.S. Pat. No. 6,718,258, the entire disclosure of which is incorporated by reference herein.

The map developer 1160 may also obtain reports about potentially hazardous locations from users operating mobile platforms throughout the region. The mobile platforms include systems that are capable of communicating reports wirelessly from locations throughout the region using a wireless network 1180. Alternatively, the mobile platforms may record a location from an entry made by the operator at the location, then stored for future retrieval and submission to the map developer. Such submission may then be wireless or by any of the aforementioned techniques. Mobile platforms may include navigation systems 1172 installed in some of the vehicles 1156, personal navigation devices 1174, or mobile phones 1176. The mobile platforms 1172, 1174, and 1176 use applications, either located locally on the mobile platform or remotely on a remote system, to report about potentially hazardous locations throughout the region. These reports may be made while the users are traveling in the region or may be made while the users are stopped. If the user is at the actual location of the hazardous condition when making a report, a positioning system associated with the user's platform, such as a GPS unit, may be used to obtain the user's position to include in the report. The platforms and applications may be similar to those used for reporting map errors described in U.S. Pat. No. 6,253,151, the entire disclosure of which is incorporated by reference herein.

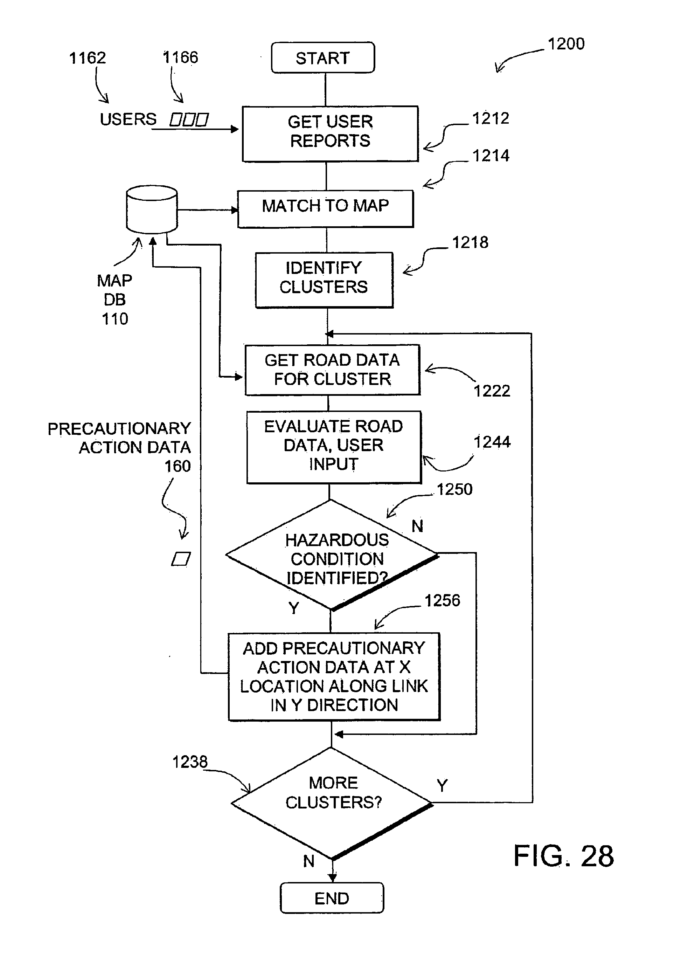

Figure 28 is a flowchart of a process 1200. The process 1200 receives the reports 1166 sent by the users 1162 (Step 1212). The information indicating the location of the hazardous condition is extracted from the reports and matched to a digital map of the geographic region (Step 1214). Based on this step, the process identifies clusters of reports 1166 that pertain to the same proximate geographic location (Step 1218). Such clusters may be of arbitrary size subject to the judgment and preferences of the map developer in determining the threshold desired to declare a location as potentially dangerous.

Next, the process 1200 obtains data from the map database 110 about the specific portion of the road network to which each cluster pertains (Step 1222). Data that describe various represented aspects of the road network in the area of the cluster are obtained. If the reports 1166 include information about the kind of hazardous condition that the users believe exists, this information is used to select specific kinds of data from the map database 110. Depending on how the reports 1166 specify the kinds of reported hazardous condition, the step of obtaining additional data from the map database 110 may be automated. Alternatively, a human operator may determine appropriate kinds of data to select from the database 110.

The process then evaluates the data obtained from the map database 110 (Step 1244). This step attempts to determine or confirm the reported hazardous condition. For example, if the reports 1166 indicate that a blind intersection exists, data is obtained from the map database 110 to identify the intersection and the geographic feature(s) that cause a driver's view to be obstructed. If the data obtained from the map database 110 does not confirm the hazardous condition, the process 1200 determines whether there are more clusters to evaluate (Steps 1250 and 1238) and if there are more, the process obtains data to evaluates the next cluster of reports (Step 1222, again).

Alternatively, the map developer may not employ a validation and confirmation step if there are a sufficiently large number of reports about a single location. In this case, the location is coded as hazardous based on the volume of reports alone. The map developer may apply other validation criteria such as reports spread over a sufficient period of time.

Referring back to Step 1250, if the data obtained from the map database 110 confirms the existence and cause of the reported hazardous condition, precautionary action data 160 is added to the map database (Step 1256). The precautionary action data 160 indicates the presence of a feature in the road network where a precautionary action may be taken. After the precautionary action data 160 is added to the database 110, the process 1200 proceeds to the step in which it is determined whether all the clusters have been evaluated (Step 1238) and if there are more clusters to evaluate, the process 1200 proceeds to obtain data to evaluate the next cluster of reports (Step 1222).

The process 1200 ends when it is determined that all the clusters of reports have been evaluated (Step 1238).

It is noted that the process 1200, above, performs a data mining function to identify the existence of a potentially difficult driving location based on user-provided reports of hazardous locations. It is noted that the process 1200, above, may evaluate multiple data items in the original database, to determine whether such conditions exist. The hazardous condition may be caused by a hill, a curve, a building, landscape, or other geographic feature represented by data in the database. By evaluating these multiple data items, a determination is made whether these multiple data items describe the condition of interest. If these data items do describe the condition, a new data item, i.e., the precautionary action data, is added to the database.

The precautionary action data 160 added to the database 110 by the process 1200 may have the structure or format shown in Figure 2. The precautionary action data 160 is associated with the road segment identified as being a user-identified hazardous location. In this embodiment, the precautionary action data 160 may include components that indicate a condition type, a precautionary action location, where a vehicle control action should be taken, data that indicates the direction along the represented road segment where the precautionary action should be taken and a reference that indicates the location of the user-identified hazardous location.

The precautionary action data 160 that indicates a location of the user-identified hazardous location is used in a vehicle system as described in connection with Figures 3 and 4.

### III. ALTERNATIVES

In the above embodiments, it was described how a process for evaluating a database that represents a road network can evaluate each data record that represents a road segment in turn to identify potentially hazardous conditions. The process is not limited to evaluating data records that represent road segments, but may be applied to data that represent any kind of feature, including nodes (intersections), boundaries, cartographic features, pedestrian walkways, bike paths, points-of-interest, and so on.

The process (100 in Figure 1) was described as a way to automatically examine records in a database that represent roads to identify locations or conditions along the road network where a precautionary action might be taken. According to the process, data is then added to indicate the location where the precautionary action should be taken. Instead of automatically adding the precautionary action data to the database, the locations where such conditions are identified could be marked on a temporary basis. Then, a geographic analyst (or other human operator) could review some or all such temporarily marked locations and validate the condition. The analyst may conduct this review by physically traveling to the locations or by reviewing satellite or aerial photographs of the locations, or video taken while driving by the locations (previously or subsequently acquired either by the analyst or others including members of the public). Based on the review, the analyst then determines whether precautionary action data should be added to the database.

It was mentioned above, that statistical information exists about the locations where accidents occur. According to another alternative, the statistical information can be used in combination with the process described in Figure 1 to provide more reliable information about accidents. For example, although information exists about locations of statistically high numbers of accidents, this information may not necessarily indicate why accidents occur or how to avoid them. Using the process of Figure 1, review of the physical conditions of the road segment or combinations of attributes about that segment may indicate the likely cause for those statistically significant co-located accidents. The combination of identifying a hazardous physical condition located near a statistically significant number of actual accidents may be used as further validation of that location as a hazardous one.

According to another alternative, statistical accident data may be incorrectly located to sufficient degree that those accidents do not cluster enough to pass the threshold to declare a multiple accident location. However, with the process described in Figure 1, once a potentially hazardous location is identified in the database, the distance threshold for statistical accident locations can be increased about that hazardous location to investigate whether their may be a significant number of accidents in that location in spite of their recorded positions to be in error.

The process (400 in Figure 4) was described as a way to use the precautionary action data that had been stored in the map database to take an appropriate action in a vehicle when the vehicle is at or is approaching a location identified as having a potentially hazardous condition. This process uses a positioning system and map database in the vehicle to determine when the vehicle is at or is approaching such a location. The process may also take into account dynamic information. Dynamic information may include current traffic and weather conditions, ambient light conditions, road conditions (e.g., ice), and so on. The vehicle may include systems to obtain such information. For example, the vehicle may have a traffic data receiver that obtains real-time traffic information, e.g., RDS-TMC messages. The process 400 may use the dynamic information in combination with the precautionary action data. For example, the process may modify the location at which a warning is provided. As an example, if weather conditions indicate that it is raining, the location at which a warning is provided to the vehicle driver about an upcoming hazardous condition may be modified, i.e., adjusted to a point farther in advance of the location of the hazardous condition, in order to give the vehicle operator additional time or distance. The process may even take certain actions only under certain conditions. For example, a warning about an intersection located over a hill may be provided only during nighttime hours. During daylight, the condition may not warrant a warning.

According to another alternative, community input from citizens or organizations about road conditions may be gathered where, when sufficient comments occur about a particular location or segment of road, such as a locally known slippery road in wet weather conditions, then that location is defined to be a hazardous location and stored in the database as such.

In another alternative, a third party may request a map developer or an entity that has an editable version of a database that contains data that represents a road network in a geographic region to perform a data mining operation for a particular kind of condition. The third party may be an automobile manufacturer, for example. According to this alternative, a process for evaluating a database representing a road network for potentially hazardous conditions, such as the process described in connection with Figure 1, is performed at the request of or under contract with the third party. Such an arrangement may arise when the third party wants to implement an Advanced Driver Assistance feature that complements a hardware-based system with a data-based system. For example, an automobile manufacturer may want to provide a curve warning system that uses a vehicle-mounted camera to detect upcoming curves visually in combination with a database in which are stored precautionary action data about curves that have decreasing curvature values, blind intersections, and less than sufficient superelevation. In this alternative, the third party identifies to the map developer the kind of condition to search for. The map developer, in turn, performs the data mining operation, as described in connection with Figure 1, and delivers a database with the added precautionary data to the third party.

It is intended that the foregoing detailed description be regarded as illustrative rather than limiting and that it is understood that the following claims including all equivalents are intended to define the scope of the invention.

## Claims

1. A method for making a database that represents a road network in a geographic region, the method comprising:
using data contained in the database to identify locations where a hazardous condition might exist; and
adding precautionary action data to the database to indicate the hazardous condition for which a precautionary action is to be taken by a vehicle system.

2. The method of Claim 1 further comprising:
prior to the step of adding precautionary data, verifying that the hazardous conditions exist at the identified locations.

3. The method of Claim 2 wherein the step of verifying is performed by direct observation of the locations by a human.

4. The method of Claim 2 wherein the step of verifying is performed by evaluating video acquired while driving.

5. The method of Claim 1 wherein the step of using data further comprises:
selecting from the database a data record that represents a road segment;
evaluating the data record to determine whether conditions that define a hazardous condition are met; and
continuing to select from the database data records that represent road segments until all data records that represent road segments have been selected.

6. The method of Claim 5 wherein the step of evaluating further comprises:
also evaluating data records that represent geographic features located around the road segment to determine whether the conditions that define the hazardous condition are met.

7. The method of Claim 1 wherein the step of using data contained in the database comprises evaluating at least two items of data contained in the database to determine whether the hazardous condition exists at the identified location.

8. The method of Claim 1 wherein the hazardous condition comprises one of:
a curve in which the superelevation slopes outward, an intersection located at a bottom of a hill, a curve with a decreasing radius of curvature, a curve located along a downhill portion of a road, a stop sign or stop light located at a bottom of a hill, a stop sign or stop light located along a curved portion of a road, a blind intersection, a curved section of road that has a lower speed limit than a preceding straight road section, a portion of a road network with road lanes of unusually narrow width, an intersection located over a hill, a portion of a road network where roads merge without a sufficient merge lane, and
locations of known hazardous conditions throughout a road network obtained by user feedback.

9. A database stored on a computer-readable medium, wherein the database includes data that represents a road network in a geographic region, wherein the database comprises:
data records that represent road segments that make up the road network; and
data that indicates precautionary action locations, wherein a precautionary action location is associated with a location determined by evaluating other data in the database to determine that a hazardous condition exists.

10. The database of Claim 9 wherein the precautionary action data further includes data that indicates a location along a road segment at which a precautionary action is to be taken by a vehicle system.

11. The database of Claim 9 wherein the precautionary action data further includes data that indicates a direction along a road segment at which a precautionary action is to be taken.

12. The database of Claim 9 wherein the precautionary action data further includes data that refers to the location of the actual hazardous condition.

13. The database of Claim 9 further comprising data that indicates permitted directions of travel along road segments, speed limits along road segments, classifications of road segments, and locations of road segments.

14. The database of Claim 9 further comprising data that identifies successor road segments of each road segment, wherein successor road segments are those road segments that connect to a road segment at each end thereof.

15. A vehicle system comprising:
a database that contains data representing a geographic region in which a vehicle is being operated, wherein the data includes data that represents a road network located in the geographic region and precautionary action data that indicates precautionary action locations associated with locations where hazardous conditions exist;
a positioning system that determines a current location of the vehicle relative to the data representing a geographic region; and
a precautionary action application responsive to the positioning system and the database that provides a precautionary action when the positioning system determines that the current location of the vehicle is approaching a location of a hazardous condition.

16. The system of Claim 15 wherein the precautionary action data further includes data that indicates a location along a road segment at which a precautionary action is to be taken by a vehicle system.

17. The system of Claim 15 wherein the precautionary action data further includes data that indicates a direction along a road segment at which a precautionary action is to be taken.

18. The system of Claim 15 wherein the precautionary action data further includes data that refers to the location of the hazardous condition.

19. A method for providing precautionary actions in a vehicle comprising:
determining a current position of the vehicle;
accessing a database that represents a road network to obtain data representations of a part of the road network around of the current position of the vehicle;
upon determining that the data representations of the part of the road network around the current position of the vehicle include precautionary action data, taking a precautionary action as the vehicle is approaching a location of a hazardous condition.

20. The method of Claim 19 further comprising:
building an electronic horizon after accessing the database; and
using the electronic horizon to determine whether precautionary action data is included therein.

21. The method of Claim 19 wherein the precautionary action is provided via a user interface of the vehicle.
